(19) Europäisches Patentamt
European Patent Office
Office européen des brevets

(11) Veröffentlichungsnummer: **0 174 278**
**B1**

(12) # EUROPÄISCHE PATENTSCHRIFT

(45) Veröffentlichungstag der Patentschrift: **19.04.89**

(51) Int. Cl.⁴: **C 07 C 103/38**, C 07 C 102/00, A 01 N 37/20

(21) Anmeldenummer: **85810392.2**

(22) Anmeldetag: **28.08.85**

(54) **Neue N-(substituierte Alkyl)-dichloracetamid-derivate.**

(30) Priorität: **03.09.84 CH 4202/84**

(43) Veröffentlichungstag der Anmeldung: **12.03.86 Patentblatt 86/11**

(45) Bekanntmachung des Hinweises auf die Patenterteilung: **19.04.89 Patentblatt 89/16**

(84) Benannte Vertragsstaaten: **BE CH DE FR GB IT LI NL**

(56) Entgegenhaltungen:
**EP-A-0 149 427**
**DE-A-2 758 418**
**DE-A-2 803 662**
**DE-A-3 325 152**

**J. Amer. Chem. Soc., vol. 54 (1932), pages 4172-4183**

**Die Akte enthält technische Angaben, die nach dem Eingang der Anmeldung eingereicht wurden und die nicht in dieser Patentschrift enthalten sind.**

(73) Patentinhaber: **CIBA- GEIGY AG, Klybeckstrasse 141, CH- 4002 Basel (CH)**

(72) Erfinder: **Dürr, Dieter, Dr., Brändelistalweg 16, CH- 4103 Bottmingen (CH)**
Erfinder: **Föry, Werner, Dr., Benkenstrasse 65, CH- 4054 Basel (CH)**

**EP 0 174 278 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft neue N-(substituiertes Alkyl)-dichloracetamid-derivate, welche zum Schützen von Kulturpflanzen gegen schädigende Wirkungen von Herbiziden geeignet sind. Die Erfindung betrifft ferner die Herstellung der neuen N-(substituiertes Alkyl)-dichloracetamid-derivate, Mittel, welche diese Derivate enthalten, und die Verwendung der Derivate oder sie enthaltender Mittel zum Schützen von Kulturpflanzen gegen schädigende Wirkungen von Herbiziden.

Beim Einsatz von Herbiziden können in Abhängigkeit von Faktoren wie beispielsweise Dosis und Applikationsart, Bodenbeschaffenheit und klimatischen Bedingungen, wie beispielsweise Belichtungsdauer, Temperatur und Niederschlagsmengen, Kulturpflanzen in gewissem Masse geschädigt werden. Eine Schädigung kann sowohl bei einer gezielten Herbizidbehandlung der Kulturpflanzen, beispielsweise durch unbeabsichtigte Überdosierung beim streifenweisen Versprühen oder Verstäuben unter Überlappung der Randbereiche auftreten, als auch durch nicht geplanten Kontakt von Kulturpflanzen mit Herbiziden, beispielsweise durch Abdriften oder Absickern von Herbiziden während oder nach der Behandlung benachbarter Areale oder durch Herbizidrückstände im Boden.

Es sind bereits Stoffe vorgeschlagen worden, welche einer schädigenden Wirkung von Herbiziden auf Kulturpflanzen entgegenwirken. Es hat sich jedoch gezeigt, dass die vorgeschlagenen Gegenmittel oft nur einen begrenzten Aktionsbereich aufweisen, beispielsweise in Bezug auf die Kulturpflanzen, die Herbizide, die Bodenbeschaffenheit und/oder klimatische Bedingungen. Ein enger Aktionsbereich kann beispielsweise seine Ursache in den physiko-chemischen Eigenschaften des Gegenmittels haben. So können sich beispielsweise Probleme aus einer ungenügenden Stabilität oder einem ungünstigen Verteilungszustand des Gegenmittels auf der Oberfläche von Kulturpflanzen oder Teilen dieser Pflanzen, beispielsweise bei der Samenbeizung, oder auch in den Kulturpflanzen und/oder im Boden ergeben.

So sind aus DB-A-3 325 152 N-[(2-Alkoxy-ethoxy)-methyl]-N-alkyl-dichloracetamide als Antidot-Präparate für Herbizide aus der Klasse der Thiolcarbamate oder Chloracetanilide bekannt geworden.

Es wurde nun gefunden, dass sich überraschenderweise eine Gruppe von neuen N-(substituiertes Alkyl)-dichloracetamid-derivaten hervorragend dazu eignet, Kulturpflanzen gegen schädigende Wirkungen von Herbiziden zu schützen. Diese Derivate werden daher im folgenden auch als "Gegenmittel", "Antidot" oder "Safener" bezeichnet. Diese Derivate zeichnen sich neben einer hervorragenden Schutzwirkung für Kulturpflanzen gegen schädigende Wirkungen von Herbiziden durch gute Stabilität (geringe Empfindlichkeit gegenüber hydrolytischen Einflüssen) und besonders vorteilhafte Lipophilieeigenschaften aus.

N-(substituiertes Alkyl)-dichloracetamid-derivate, welche zum Schützen von Kulturpflanzen gegen schädigende Wirkungen von Herbiziden geeignet sind, entsprechen der Formel I

$$Cl_2CH\text{-}CO\underset{|}{\overset{R^1}{N}}\text{-}(A^1\text{-}O)_m\text{-}(A^2\text{-}O)_n\text{-}(A^3\text{-}O)_o\text{-}(A^4\text{-}O)_p\text{-}R^2 \qquad (I)$$

worin

$R^1$ Wasserstoff, Benzyl, unsubstituiertes oder durch Substituenten aus der Gruppe Chlor, Cyan, $C_1$-$C_6$-Alkoxy, $C_1$-$C_4$-Alkoxy-$C_1$-$C_4$-alkoxy, Carboxy oder Carbalkoxy mit 1 bis 6 Kohlenstoffatomen im Alkylteil ein- oder mehrfach substituiertes $C_1$-$C_6$-Alkyl, unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_3$-$C_6$-Alkenyl oder unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_3$-$C_6$-Alkinyl,

$R^2$ Wasserstoff, Benzyl, unsubstituiertes oder durch Chlor ein- oder mehrfach substituiertes Alkylcarbonyl mit 1 bis 6 Kohlenstoffatomen im Alkylteil, unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_1$-$C_6$-Alkyl, unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_2$-$C_6$-Alkenyl oder unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_2$-$C_6$-Alkinyl,

$A^1$ einen $C_2$-$C_4$-Alkylenrest,

$A^2$, $A^3$ und $A^4$ unabhängig voneinander einen $C_1$-$C_4$-Alkylenrest bedeuten,

m für eine Zahl von 1 bis 5,

n, o und p unabhängig voneinander für eine Zahl von 0 bis 3 stehen, und die Summe von m, n, o und p eine Zahl von 2 bis 5 ergibt.

$C_1$-$C_4$- und $C_1$-$C_6$-Alkyl als Substituent oder Teil eines Substituenten umfasst geradkettig und verzweigte Alkylgruppen wie beispielsweise Methyl, Äthyl, n-Propyl, Isopropyl, n-Butyl, sek.-Butyl, tert.-Butyl, Isobutyl oder, bei $C_1$-$C_6$-Alkyl, auch n-Pentyl, n-Hexyl und Isomere davon. Als gegebenenfalls chlorsubstituierter Alkylteil des Alkylcarbonyls kommen bevorzugt Methyl und Chlormethyl in Frage.

Für $R^1$ kommen als Alkenyl- und Alkinylreste nur solche in Betracht, bei denen dasjenige Kohlenstoffatom,

über welches der aliphatische Rest mit dem Stickstoffatom verknüpft ist, nicht über eine ungesättigte Bindung mit einem benachbarten Kohlenstoffatom verbunden ist. Beispiele für Alkenylreste sind Allyl, Methylallyl und 2-Butenyl, und für Alkinylreste 2-Propinyl und 2-Butinyl. Für $R^2$ kommen als Alkenyl- und Alkinylreste beispielsweise ebenfalls die vorstehend genannten sowie beispielsweise auch Vinyl und Äthinyl in Betracht.

Alkylenreste können geradkettig oder verzweigt sein. Beispiele für solche Reste sind Methylen, Äthylen, n-Propylen, n-Butylen, 1-Methyläthylen, 2-Methyläthylen, 1,2-Dimethyläthylen und 1-Methylpropylen.

Soweit optisch isomere Verbindungen der Formel I existieren, sind im Rahmen der vorliegenden Erfindung sowohl die optisch reinen Isomere wie auch die Isomerengemische zu verstehen.

Wegen ihrer Wirkung als Herbizid-Safener sind solche Verbindungen der Formel I hervorzuheben, in denen entweder

a) $R^1$ für Benzyl, unsubstituiertes oder durch Substituenten aus der Gruppe Chlor, Cyan, $C_1$-$C_6$-Alkoxy, $C_1$-$C_4$-Alkoxy-$C_1$-$C_4$-alkoxy, Carboxy oder Carbalkoxy mit 1 bis 6 Kohlenstoffatomen im Alkylteil ein- oder mehrfach substituiertes $C_1$-$C_6$-Alkyl, unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_3$-$C_6$-Alkenyl oder unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_3$-$C_6$-Alkinyl steht, oder

b) $A^1$ für einen Äthylenrest und m für die Zahl 2 oder 3 steht, und n, o und p die Zahl 0 bedeuten, oder

c) $R^2$ Benzyl, unsubstituiertes oder durch Chlor ein- oder mehrfach substituiertes Alkylcarbonyl mit 1 bis 6 Kohlenstoffatomen im Alkylteil, unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_1$-$C_6$-Alkyl, unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_2$-$C_6$-Alkenyl oder unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_2$-$C_6$-Alkinyl steht, oder

d) eine Kombination der unter a und b aufgeführten Merkmale, oder

e) eine Kombination der unter a und c aufgeführten Merkmale, oder

f) eine Kombination der unter b und c aufgeführten Merkmale, oder

g) eine Kombination der unter a, b und c aufgeführten Merkmale.

Eine interessante Gruppe stellen ferner Verbindungen der Formel I dar, in denen $R^1$ Wasserstoff, Benzyl, $C_1$-$C_4$-Alkyl, $C_1$-$C_4$-Alkoxy-$C_1$-$C_4$-alkyl, $C_1$-$C_4$-Alkoxy-$C_1$-$C_4$-alkoxy-$C_1$-$C_4$-alkyl, Allyl oder 2-Propenyl, $R^1$ Wasserstoff, Benzyl, $C_1$-$C_6$-Alkyl, Allyl oder 2-Propinyl, $A^1$ einen Äthylen- oder 2-Methyläthylenrest, $A^2$ einen Methylen- oder Äthylenrest, $A^3$ einen Äthylenrest, m eine Zahl von 1 bis 3, n eine Zahl von 0 bis 2, o die Zahl 0 oder 1 und p die Zahl 0 bedeuten, und die Summe von m, n und o eine Zahl von 2 bis 5 ergibt, und hiervon insbesondere diejenigen Verbindungen, in denen $R^2$, $A^1$, m und p die vorstehend angegebenen Bedeutungen haben, $R^1$ Wasserstoff, Benzyl, $C_1$-$C_3$-Alkyl, 2-Methoxyäthyl, Allyl oder 2-Propinyl, $A^2$ einen Äthylenrest, n die Zahl 0 oder 2 und o die Zahl 0 bedeuten, und die Summe von m und n die Zahl 2 oder 3 ergibt.

Eine besonders erwähnenswerte Gruppe bilden Verbindungen der Formel I, in denen $R^1$ Wasserstoff, Benzyl, n-Propyl, Allyl oder 2-Propinyl, $R^2$ Methyl, n-Butyl oder 2-Propinyl und o und p die Zahl 0 bedeuten, und i) $A^1$ für einen Äthylenrest, m für die Zahl 2 oder 3 und n für die Zahl 0 stehen, oder ii) $A^1$ für einen 2-Methyläthylenrest, m für die Zahl 1, $A^2$ für einen Äthylenrest und n für die Zahl 2 stehen.

Besonders erwähnenswerte Einzelverbindungen sind:

N-{2-[2-(2-Methoxyäthoxy)-äthoxy]-äthyl}-2,2-dichloracetamid,
N-[2-(2-n-Butoxyäthoxy)-äthyl]-2,2-dichloracetamid,
N-{2-[2-(2-Hydroxyäthoxy)-äthoxy]-äthyl}-2,2-dichloracetamid,
N-[2-(2-Hydroxyäthoxy)-äthyl]-2,2-dichloracetamid,
N-[2-(2-n-Butoxyäthoxy)-äthyl]-N-(2-propinyl)-2,2-dichloracetamid,
N-{2-[2-(2-n-Butoxyäthoxy)-äthoxy]-n-propyl}-2,2-dichloracetamid,
N-Allyl-N-[2-(2-n-butoxyäthoxy)-äthyl]-2,2-dichloracetamid,
N-(2-Propinyl)-N-{2-[2-(2-(2-propinyloxy)-äthoxy)-äthoxy]-äthyl}-2,2-dichloracetamid,
N-{2-[2-(2-Methoxyäthoxy)-äthoxy]-äthyl}-N-(2-propinyl)-2,2-dichloracetamid,
N-Benzyl-N-[2-(2-n-butoxyäthoxy)-äthyl]-2,2-dichloracetamid,
N-Allyl-N-{2-[2-(2-methoxyäthoxy)-äthoxy]-äthyl}-2,2-dichloracetamid,
N-[2-(2-n-Butoxyäthoxy)-äthyl]-N-(n-propyl)-2,2-dichloracetamid,
N-(2-Methoxyäthyl)-N-{2-[2-(2-methoxyäthoxy)-äthoxy]-äthyl}-2,2-dichloracetamid,
N-Benzyl-N-{2-[2-(2-benzyloxyäthoxy)-äthoxy]-äthyl}-2,2-dichloracetamid,
N-Allyl-N-{2-[2-(2-allyloxyäthoxy)-äthoxy]-äthyl}-2,2-dichloracetamid,
N-Benzyl-N-{2-[2-(2-methoxyäthoxy)-äthoxy]-äthyl}-2,2-dichloracetamid,
N-Allyl-N-[2-(2-allyloxyäthoxy)-äthyl]-2,2-dichloracetamid,
N-{2-[2-(2-Methoxyäthoxy)-äthoxy]-äthyl}-N-methyl-2,2-dichloracetamid,
N-[2-(2-Methoxyäthoxy)-äthyl]-N-methyl-2,2-dichloracetamid,
N-Allyl-N-{2-[2-((2-methoxyäthoxy)-methoxy)-äthoxy]-äthyl}-2,2-dichloracetamid,
N-Allyl-N-{2-[(2-methoxyäthoxy)-methoxy]-äthyl}-2,2-dichloracetamid,
N-{2-[(2-Methoxyäthoxy)-methoxy]-äthyl}-N-[(2-methoxyäthoxy)-methyl]-2,2-dichloracetamid und

N-Allyl-N-{2-[2-[2-((2-methoxyäthoxy)-methoxy)-äthoxy]-äthoxy]-äthyl}-2,2-dichloracetamid.
Die Verbindungen der Formel I lassen sich nach folgenden Verfahrensvarianten herstellen:
a) durch Umsetzung einer Verbindung der Formel II

$$HN(R^1)-(A^1-O)_m-(A^2-O)_n-(A^3-O)_o-(A^4-O)_p-R^2 \qquad (II)$$

worin $R^1$, $R^2$, $A^1$, $A^2$, $A^3$, $A^4$, m, n, o und p die für Formel I angegebenen Bedeutungen haben, in Gegenwart eines säurebindenden Mittels mit 2,2-Dichloracetylchlorid,
oder

b) durch Umsetzung
i) einer Verbindung der Formel Ia

$$Cl_2CH-CONH-(A^1-O)_m-(A^2-O)_n-(A^3-O)_o-(A_5-O)_p-R^2 \qquad (Ia)$$

worin $A^1$, $A^2$, $A^3$, $A^4$, m, n, o und p die für Formel I angegebenen Bedeutungen haben und $R^2$ die für Formel I angegebenen Bedeutungen mit Ausnahme von Wasserstoff hat, in Gegenwart eines säurebindenden Mittels mit einer Verbindung der Formel IV

$$X^1-R^1 \qquad (IV)$$

worin $R^1$ die für Formel 1 angegebene Bedeutung hat und $X^1$ für einen abspaltbaren Rest steht, und gewünschtenfalls zur Herstellung einer Verbindung der Formel I, in welcher $R^2$ für Wasserstoff steht, Hydrolysierung der erhaltenen Verbindung, in welcher $R^2$ für ein unsubstituiertes oder durch Chlor ein- oder mehrfach substituiertes Alkylcarbonyl mit 1 bis 6 Kohlenstoffatomen im Alkylteil steht, auf an sich bekannte Weise, oder
ii) durch Umsetzung einer Verbindung der Formel Ib

$$Cl_2CH-CON(R^1)-(A^1-O)_m-(A^2-O)_n-(A^3-O)_o-(A^4-O)_pH \qquad (Ib)$$

worin $A^1$, $A^2$, $A^3$, $A^4$, m, n, o und p die für Formel I angegebenen Bedeutungen haben und $R^1$ die für Formel I angegebenen Bedeutungen mit Ausnahme von Wasserstoff hat, in Gegenwart eines säurebindenden Mittels mit einer Verbindung der Formel V

$$X^2-R^2 \qquad (V)$$

worin $R^2$ die für Formel I angegebene Bedeutung hat und $X^2$ für einen leicht abspaltbaren Rest steht, oder
iii) durch Umsetzung einer Verbindung der Formel Ic

$$Cl_2CH-CONH-(A^1-O)_m-(A^2-O)_n-(A^3-O)_o-(A^4-O)_pH \qquad (Ic)$$

worin $A^1$, $A^2$, $A^3$, $A^4$, m, n, o und p die fur Formel I angegebenen Bedeutungen haben, in Gegenwart eines säurebindenden Mittels mit einer Verbindung der Formel VI

$$X^3-R^3 \qquad (VI)$$

worin $R^3$ die Bedeutung von $R^1$ und $R^2$ wie für Formel I angegeben, hat, wobei $R^1$ und $R^2$ hier identisch sind, und $X^3$ für einen abspaltbaren Rest steht, oder

c) durch Umsetzung einer Verbindung der Formel VII

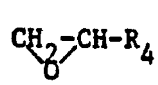

(VII)

worin $R_4$ für Wasserstoff, Methyl oder Äthyl steht, mit einer Verbindung der Formel Ib

$$Cl_2CH\text{-}CON(R^1)\text{-}(A^1\text{-}O)_m\text{-}(A^2\text{-}O)_n\text{-}(A^3\text{-}O)_o\text{-}(A^4\text{-}O)_pH \quad \text{(Ib)}$$

worin $R^1$, $A^1$, $A^2$, $A^3$ und $A^4$ die für Formel I angegebenen Bedeutungen haben und

i) m eine Zahl von 1 bis 4 ist und n, o und p die Zahl 0 bedeuten, oder

ii) m eine Zahl von 1 bis 5 und n eine Zahl von 0 bis 2 ist und o und p 0 sind und die Summe von m und n eine Zahl von 2 bis 4 ergibt, oder

iii) m eine Zahl von 1 bis 5, n eine Zahl von 0 bis 3, o eine Zahl von 0 bis 2 und p die Zahl 0 ist und die Summe von m, n und o eine Zahl von 2 bis 4 ergibt, oder

iv) m eine Zahl von 1 bis 5 ist, n und o eine Zahl von 0 bis 3 sind und p eine Zahl von 0 bis 2 ist und die Summe von m, n, o und p eine Zahl von 2 bis 4 ergibt.

Unter einem abspaltbaren Rest $X^1$, $X^2$ und $X^3$ sind für solche Reaktionen übliche Reste starker Säuren zu verstehen, wie beispielsweise Sulfonsäurereste oder vorzugsweise Halogenatome. Beispiele für abspaltbare Reste sind Benzolsulfonyloxy, p-Toluolsulfonyloxy, 4-Methylphenylsulfonyloxy und insbesondere $C_1$-$C_4$-Methansulfonyloxy, während als Halogenatome insbesondere Chlor, Brom und Jod in Betracht kommen.

Die vorstehend beschriebenen Umsetzungen werden zweckmässigerweise in einem reaktionsinerten Lösungsmittel und vorzugsweise bei Normaldruck durchgeführt. Als Lösungsmittel eignen sich beispielsweise aliphatische, cycloaliphatische und aromatische Kohlenwasserstoffe wie Benzol, Toluol, Xylole, Cyclohexan oder Petroläther, halogenierte Kohlenwasserstoffe wie Chlorbenzol, Methylenchlorid, 1,2-Dichloräthan oder Chloroform, Äther und ätherartige Verbindungen wie Diäthyläther, Diisopropyläther, tert.-Butylmethyläther, 1,2-Dimethoxyäthan, Dioxan, Tetrahydrofuran oder Anisol, Ketone wie Aceton oder Methyläthylketon, Ester wie Äthylacetat oder Butylacetat, sowie auch Gemische solcher Lösungsmittel untereinander.

Als säurebindende Mittel sind insbesondere tertiäre Amine wie Trimethylamin, Triäthylamin, Chinuclidin, 1,4-Diazabicyclo(2,2,2)-octan, 1,5-Diazabicyclo(4,3,0)non-5-en oder 1,5-Diazabicyclo(5,4,0)undec-7-en geeignet. Es können aber auch anorganische Basen verwendet werden. Beispiele für solche Basen sind Hydride wie Natrium- oder Calciumhydrid, Hydroxide wie Natrium- oder Kaliumhydroxid, Carbonate wie Natrium- oder Kaliumcarbonat, oder Hydrogencarbonate wie Kalium- oder Natriumhydrogencarbonat.

Die vorstehend beschriebenen Umsetzungen werden im allgemeinen bei einer Temperatur im Bereich von -70° bis 120°C, vorzugsweise 10° bis 50°C, durchgeführt.

Die Ausgangsverbindungen sind bekannt oder lassen sich analog bekannten Verfahren herstellen, wie sie beispielsweise in der schweizerischen Patentanmeldung Nr. 6758/83-5 beschrieben sind.

Die Verbindungen der Formeln Ia, Ib und Ic sind nach der unter a) für Verbindungen der Formel I angegebenne Methode herstellbar.

Die Verbindungen der Formel II lassen sich herstellen, indem man eine Verbindung der Formel VIII

$$HO\text{-}(A^1\text{-}O)_m\text{-}(A^2\text{-}O)_n\text{-}(A^3\text{-}O)_o\text{-}(A^4\text{-}O)_p\text{-}R^2 \quad \text{(VIII)}$$

worin $R^2$, $A^1$, $A^2$, $A^3$, $A^4$, m, n, o und p die für Formel I angegebenen Bedeutungen haben, auf an sich bekannte Weise mit einem geeigneten Halogenierungsmittel, vorzugsweise einem Chlorierungsmittel, umsetzt und die erhaltene Verbindung der Formel IX

$$Hal\text{-}(A^1\text{-}O)_m\text{-}(A^2\text{-}O)_n\text{-}(A^3\text{-}O)_o\text{-}(A^4\text{-}O)_p\text{-}R^2 \quad \text{(IX)}$$

worin $R^2$, $A^1$, $A^2$, $A^3$, $A^4$, m, n, o und p die für Formel I angegebenen Bedeutungen haben und Hal für ein Halogenatom, vorzugsweise ein Chloratom, steht, mit einer Verbindung der Formel X

$$NH_2\text{-}R^1 \quad \text{(X)}$$

worin $R^1$ die für Formel I angegebene Bedeutung hat, umsetzt.

Als geeignete Halogenierungsmittel lassen sich beispielsweise Phosphorhalogenide wie Phosphorylchlorid oder Phosphorpentachlorid, Halogenwasserstoffsäuren wie Chlorwasserstoffsäure, Bromwasserstoffsäure oder Jodwasserstoffsäure oder insbesondere Thionylchlorid verwenden. Die Halogenierung einer Verbindung der Formel VIII erfolgt zweckmässigerweise in einem reaktionsinerten Lösungsmittel, wie beispielsweise einem aliphatischen, cycloaliphatischen oder aromatischen Kohlenwasserstoff, wie n-Hexan, Cyclohexan, Xylole, Benzol oder Toluol oder einem Äther, wie Diäthyläther, gegebenenfalls in Gegenwart eines Katalysators, wie beispielsweise-Dimethylformamid.

Die Umsetzung der erhaltenen Verbindung der Formel IX mit einer Verbindung der Formel X kann nach Isolierung der Verbindung der Formel IX, beispielsweise durch Destillation, oder auch ohne Isolierung erfolgen und wird bevorzugt im Autoklaven bei einer Temperatur im Bereich von 50° bis 200°C und erhöhtem Druck durchgeführt. Die so erhaltene Verbindung der Formel II kann gewünschtenfalls durch fraktionierte Destillation gereinigt werden.

Die Verbindungen der Formel VIII sind im Handel erhältlich oder können auf an sich bekannte Weise durch Umsetzung eines entsprechenden Alkohols mit einem geeigneten Epoxid hergestellt werden, wie beispielsweise im Beispiel 1 dargestellt.

Die Verbindungen der Formel 1 können auf verschiedene Weise zum Schützen von Kulturpflanzen gegen schädigende Wirkungen von Herbiziden eingesetzt werden. So kann beispielsweise eine Vorbehandlung des Saatgutes von Kulturpflanzen (Beizung von Samen oder Stecklingen) erfolgen oder die Verbindungen können vor der Aussaat, zusammen mit dem Saatgut oder nach der Aussaat in oder auf den Boden appliziert werden. Die Verbindungen der Formel I können vor der Anwendung eines Herbizids, gleichzeitig mit einem Herbizid oder auch nach der Anwendung eines Herbizids und im Vorauflauf- wie im Nachauflaufverfahren eingesetzt werden, wobei die Vorauflaufbehandlung sowohl die Behandlung der Anbaufläche vor der Aussaat (ppi = pre plant incorporation) als auch die Behandlung der angesäten, aber noch nicht bewachsenen Anbaufläche einschliesst.

Die zu applizierende Aufwandmenge an Antidot im Verhältnis zum Herbizid richtet sich weitgehend nach der Anwendungsart. Bei einer Feldbehandlung, welche entweder unter Verwendung einer Kombination von Antidot und Herbizid als Tankmischung oder durch separate Applikation von Antidot und Herbizid erfolgt, liegt im allgemeinen die Aufwandmenge an Antidot in einem Bereich von 0,1 bis 10 kg/ha, vorzugsweise 0,5 bis 2 kg/ha, die Aufwandmenge an Herbizid in einem Bereich von 0,5 bis 20 kg/ha, vorzugsweise 1 bis 4 kg/ha, und das Gewichtsverhältnis von Antidot zu Herbizid in einem Bereich von 1 : 100 bis 10 : 1, bevorzugt 1 : 5 bis 8 : 1, und insbesondere 1 : 1. In der Regel wird bei einer Aufwandmenge an Antidot von 0,5 bis 2 kg/ha, einer Aufwandmenge an Herbizid von 1 bis 4 kg/ha und einem Gewichtsverhältnis von Antidot zu Herbizid von 1 : 5 bis 8 : 1 eine gute Schutzwirkung erzielt. Eine relative Schutzwirkung von 30 % stellt bereits einen erheblichen Verbesserungsfaktor dar. Bei der Samenbeizung werden im allgemeinen 0,01 bis 10 g Antidot/kg Samen, vorzugsweise 0,05 bis 1 g Antidot/kg Samen, appliziert. Wird das Antidot in flüssiger Form kurz vor der Aussaat unter Samenquellung appliziert, so werden zweckmässigerweise Antidot-Lösungen verwendet, welche den Wirkstoff in einer Konzentration von 1 bis 10 000, vorzugsweise von 100 bis 1 000 ppm, enthalten.

Die Verbindungen der Formel I können für sich allein oder zusammen mit inerten Zusatzstoffen und/oder den Herbiziden zur Anwendung gelangen.

Die vorliegende Anmeldung betrifft daher auch Mittel, welche Verbindungen der Formel I und inerte Zusatzstoffe und/oder zu antagonisierende Herbizide enthalten.

Für die Verwendung von Verbindungen der Formel I oder sie enthaltender Mittel zum Schützen von Kulturpflanzen gegen schädigende Wirkungen von Agrarchemikalien kommen verschiedene Methoden und Techniken in Betracht, wie beispielsweise die folgenden:

i) <u>Samenbeizung</u>

a) Beizung der Samen mit einem als Spritzpulver formulierten Wirkstoff der Formel I durch Schütteln in einem Gefäss bis zur gleichmässigen Verteilung auf der Samenoberfläche (Trockenbeizung). Man verwendet dabei etwa 10 bis 500 g Wirkstoff der Formel I (40 g bis 2 kg Spritzpulver) pro 100 kg Saatgut.

b) Beizung der Samen mit einem Emulsionskonzentrat des Wirkstoffs der Formel I nach der Methode a) (Nassbeizung).

c) Beizung durch Tauchen des Saatguts in eine Brühe mit 50 - 3200 ppm Wirkstoff der Formel I während 1 bis 72 Stunden und gegebenenfalls nachfolgendes Trocknen der Samen (Tauchbeizung).

Die Beizung des Saatguts oder die Behandlung des angekeimten Sämlings sind naturgemäss die bevorzugten Methoden der Applikation, weil die Wirkstoffbehandlung vollständig auf die Zielkultur gerichtet ist. Man verwendet in der Regel 10 g bis 500 g Antidot, vorzugsweise 50 bis 250 g Antidot, pro 100 kg Saatgut, wobei man je nach Methodik, die auch den Zusatz anderer Wirkstoffe oder Mikronährstoffe ermöglicht, von den angegebenen Grenzkonzentrationen nach oben oder unten abweichen kann (Wiederholungsbeize).

ii) <u>Applikation als Tankmischung</u>

Eine flüssige Aufarbeitung eines Gemisches von Antidot und Herbizid (gegenseitiges Mengenverhältnis vorzugsweise zwischen 10 : 1 und 1 : 10) wird verwendet, wobei die Aufwandmenge an Herbizid 0,1 bis 10 kg pro Hektar beträgt. Solche Tankmischung wird vorzugsweise vor oder unmittelbar nach Aussaat appliziert oder 5 bis 10 cm tief in den noch nicht gesäten Boden eingearbeitet.

iii) <u>Applikation in die Saatfurche</u>

Das Antidot wird als Emulsionskonzentrat, Spritzpulver oder als Granulat in die offene besäte Saatfurche eingebracht und hierauf wird nach dem Decken der Saatfurche in normaler Weise das Herbizid im Vorauflaufverfahren appliziert.

iv) <u>Kontrollierte Wirkstoffabgabe</u>

Der Wirkstoff der Formel I wird in Lösung auf mineralische Granulatträger oder polymerisierte Granulate (Harnstoff/Formaldehyd) aufgezogen und trocknen gelassen. Gegebenenfalls kann ein Überzug aufgebracht werden (Umhüllungsgranulate), der es erlaubt, den Wirkstoff über einen bestimmten Zeitraum dosiert abzugeben.

Als Kulturpflanzen sind im Rahmen der vorliegenden Erfindung insbesondere solche Pflanzen zu verstehen, die in irgendeiner Form Ertragsstoffe wie beispielsweise Samen, Wurzeln, Stengel, Knollen, Blätter oder

Blüten, oder Inhaltsstoffe, wie beispielsweise Öle, Zucker, Stärke oder Eiweiss liefern und zu diesem Zweck angebaut werden, vor allem solche Pflanzen, die auf dem Nahrungs- oder Textilsektor von Bedeutung sind. Zu diesen Pflanzen gehören beispielsweise Weizen, Roggen, Gerste, Hafer, Reis, Kulturhirse, Mais, Bohnen, Erbsen, Soja, Baumwolle, Zuckerrohr und Zuckerrüben.

Die Erfindung betrifft auch ein Verfahren zur selektiven Bekämpfung von Umkräutern in Kulturpflanzenbeständen, wobei die Kulturpflanzenbestände, Teile der Kulturpflanzen oder Anbauflächen für Kulturpflanzen mit einem Herbizid und einer Verbindung der Formel I oder einem Mittel, welches diese Kombination enthält, behandelt werden. Die die Herbizid/Antidot-Kombination enthaltenden Mittel ebenfalls einen Bestandteil der vorliegenden Erfindung.

Bei den zu bekämpfenden Unkräutern kann es sich sowohl um monokotyle wie um dikotyle Unkräuter handeln.

Als zu antagonisierende Herbizide kommen solche der verschiedensten Stoffklassen, insbesondere Halogenacetanilide und Thiolcarbamate, in Betracht.

Zu antagonisierende herbizide Halogenacetanilide sind vorzugsweise solche der allgemeinen Formel XI

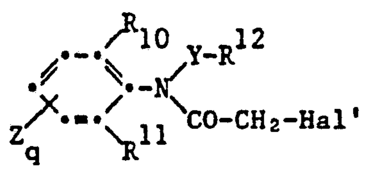

(XI)

In dieser Formel bedeuten

Hal' Halogen, insbesondere Chlor oder Brom,

$R^{10}$ und $R^{11}$ unabhängig voneinander je Wasserstoff, Halogen, niederes Alkyl, Alkoxy, Alkylthio, Halogenalkyl, Alkoxyalkyl oder Alkylthioalkyl,

Z Wasserstoff, Halogen, niederes Alkyl, Alkoxy, Alkylthio, Halogenalkyl, Alkoxyalkyl oder Alkylthioalkyl, wobei die vorgenannten Reste Z vorzugsweise in 3-Stellung in Bezug auf das Stickstoffatom stehen,

q eine Zahl von 0 bis 3,

Y Alkylen, insbesondere Methylen, 1,1- und 1,2-Äthylen, wobei 1,2-Äthylen durch 1 - 2 niedere Alkylgruppen substituiert sein kann, und

$R^{12}$ niederes Alkoxy, Hydroxycarbonyl, Alkoxycarbonyl, Carbamoyl, N-Alkylcarbamoyl, N,N-Dialkylcarbamoyl, Cyano, ein gegebenenfalls substituierter stickstoffhaltiger heterocyclischer Rest, Alkylcarbonyl, gegebenenfalls substituiertes Benzoyl, gegebenenfalls substituiertes 1,3,4-Oxadiazol-2-yl, 1,3,4-Thiadiazol-2-yl, 1,3,4-Triazol-3-yl oder 1,3,4-Triazol-1-yl bedeutet.

Als einzelne Vertreter solcher Halogenacetanilide seien beispielsweise die folgenden genannt:

N-Äthoxymethyl-N-chloracetyl-2-äthyl-6-methylanilin,
N-Chloracetyl-N-methoxymethyl-2,6-diäthylanilin,
N-Chloracetyl-N-(2-methoxyäthyl)-2,6-dimethylanilin,
N-(2-Allyloxyäthyl)-N-chloracetyl-2,6-dimethylanilin,
N-Chloracetyl-N-(2-n-propoxyäthyl)-2,6-dimethylanilin,
N-Chloracetyl-N-(2-isopropoxyäthyl)-2,6-dimethylanilin,
N-Chloracetyl-N-(2-methoxyäthyl)-2-äthyl-6-methylanilin,
N-Chloracetyl-N-(methoxyäthyl)-2,6-diäthylanilin,
N-(2-Äthoxyäthyl)-N-chloracetyl-2-äthyl-6-methylanilin
N-Chloracetyl-N-(2-methoxy-1-methyläthyl)-2-methylanilin,
N-Chloracetyl-N-(2-methoxy-1-methyläthyl)-2,6-dimethylanilin,
N-Chloracetyl-N-(2-methoxy-1-methyläthyl)-2,6-diäthylanilin,
N-Chloracetyl-N-(2-methoxy-1-methyläthyl)-2-äthyl-6-methylanilin,
N-(2-Äthoxyäthyl)-N-chloracetyl-2,6-diäthylanilin,
N-Chloracetyl-N-(2-n-propoxyäthyl)-2-äthyl-6-methylanilin,
N-Chloracetyl-N-(2-propoxyäthyl)-2,6-diäthylanilin,
N-Chloracetyl-N-(2-isopropoxyäthyl)-2-äthyl-6-methylanilin,
N-Äthoxycarbonylmethyl-N-chloracetyl-2,6-dimethylanilin,
N-Äthoxycarbonylmethyl-N-chloracetyl-2,6-diäthylanilin,
N-Chloracetyl-N-methoxycarbonylmethyl-2,6-dimethylanilin,
N-Chloracetyl-N-(2,2-diäthoxyäthyl)-2,6-dimethylanilin,
N-Chloracetyl-N-(2-methoxy-1-methyläthyl)-2,3-dimethylanilin,
N-(2-Äthoxyäthyl)-N-chloracetyl-2-methylanilin,
2-Chloracetyl-N-(2-methoxyäthyl)-2-methylanilin,
N-Chloracetyl-N-(2-methoxy-2-methyläthyl)-2,6-dimethylanilin,
N-(2-Äthoxy-2-methyläthyl)-N-chloracetyl-2-äthyl-6-methylanilin,

N-Chloracetyl-N-(1-äthyl-2-methoxyäthyl)-2,6-dimethylanilin,
N-Chloracetyl-N-(2-methoxyäthyl)-2-methoxy-6-methylanilin,
N-n-Butoxymethyl-N-chloracetyl-2-tert.-butylanilin,
N-(2-Äthoxyäthyl-1-methyläthyl)-N-chloracetyl-2,6-dimethylanilin,
N-Chloracetyl-N-(2-methoxyäthyl)-2-chlor-6-methylanilin,
N-(2-Äthoxyäthyl)-N-chloracetyl-2-chlor-6-methylanilin,
N-(2-Äthoxyäthyl)-N-chloracetyl-2,3,6-trimethylanilin,
N-Chloracetyl-1-(2-methoxyäthyl)-2,3,6-trimethylanilin,
N-Chloracetyl-N-cyanomethyl-2,6-dimethylanilin,
N-But-3-in-1-yl-N-chloracetylanilin,
N-Chloracetyl-N-propargyl-2-äthyl-6-methylanilin,
N-Chloracetyl-N-(1,3-dioxolan-2-ylmethyl)-2,6-dimethylanilin,
Chloracetyl-N-(1,3-dioxolan-2-ylmethyl)-2-äthyl-6-methylanilin,
N-Chloracetyl-N-(1,3-dioxan-2-ylmethyl)-2-äthyl-6-methylanilin,
N-Chloracetyl-N-(2-furanylmethyl)-2,6-dimethylanilin,
N-Chloracetyl-N-(2-furanylmethyl)-2-äthyl-6-methylanilin,
N-Chloracetyl-N-(2-tetrahydrofuranylmethyl)-2,6-dimethylanilin,
N-Chloracetyl-N-(N-propargylcarbamoylmethyl)-2,6-dimethylanilin,
N-Chloracetyl-N-(N,N-dimethylcarbamoylmethyl)-2,6-dimethylanilin,
N-(n-Butoxymethyl)-N-chloracetyl-2,6-diäthylanilin,
N-(2-n-Butoxyäthyl)-N-chloracetyl-2,6-diäthylanilin,
N-Chloracetyl-N-(2-methoxy-1,2-dimethyläthyl)-2,6-dimethylanilin,
N-Chloracetyl-N-isopropyl-2,3-dimethylanilin,
N-Chloracetyl-N-isopropyl-2-chloranilin,
N-Chloracetyl-N-(1H-pyrazol-1-ylmethyl)-2,6-dimethylanilin,
N-Chloracetyl-N-(1H-pyrazol-1-ylmethyl)-2-äthyl-6-methylanilin,
N-Chloracetyl-N-(1H-1,2,4-triazol-1-ylmethyl)-2,6-dimethylanilin,
N-Chloracetyl-N-(1H-1,2,4-triazol-1-ylmethyl)-2,6-diäthylanilin,
N-Benzoylmethyl-N-chloracetyl-2,6-dimethylanilin,
N-Benzoylmethyl-N-chloracetyl-2-äthyl-6-methylanilin,
N-Chloracetyl-N-(5-methyl-1,3,4-oxadiazol-2-yl)-2,6-diäthylanilin,
N-Chloracetyl-N-(5-methyl-1,3,4-oxadiazol-2-yl)-2-äthyl-6-methylanilin,
N-Chloracetyl-N-(5-methyl-1,3,4-oxadiazol-2-yl)-2-tert.-butylanilin,
N-Chloracetyl-N-(4-chlorbenzoylmethyl)-2,6-dimethylanilin und
N-Chloracetyl-N-(1-methyl-5-methylthio-1,3,4-triazol-2-ylmethyl)-2,6-diäthylanilin.

Weitere Halogenacetanilide, deren schädigende Wirkung auf Kulturpflanzen durch die neuen N-(substituiertes Alkyl)-dichloracetamidderivate der Formel I aufgehoben werden kann, sind in R. Wegler, Chemie der Pflanzenschutz- und Schädlingsbekämpfungsmittel, Band 8, Springer-Verlag Heidelberg, New York, 1982, Seiten 90 - 93 und 322 - 327, aufgeführt.

Herbizid wirksame Thiolcarbamate, vor deren phytotoxischer Wirkung Kulturpflanzen, insbesondere Weizen, Roggen, Gerste, Hafer, Reis und veredelte Sorghum-Hirse, geschützt werden können, sind vorzugsweise solche der allgemeinen Formeln XII und XIII:

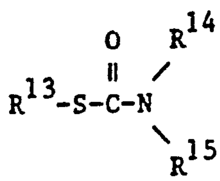 (XII) und 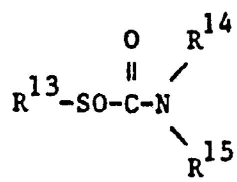 (XIII)

In diesen Formeln bedeutet
$R^{13}$ niederes Alkyl, Alkenyl, Chlorallyl, Dichlorallyl, Trichlorallyl, Benzyl oder 4-Chlorbenzyl,
$R^{14}$ $C_2$-$C_4$-Alkyl und
$R^{15}$ $C_2$-$C_4$-Alkyl oder Cyclohexyl, wobei die Reste
$R^{14}$ und $R^{15}$ zusammen mit dem Stickstoffatom, an das sie gebunden sind, einen Hexahydro-1H-azepin-, Dekahydrochinolin- oder 2-Methyldekahydro-chinolin-Ring bilden können.

Als einzelne Vertreter solcher Thiolcarbamate seien beispielsweise die folgenden genannt:
S-Äthyl-N,N-dipropylthiolcarbamat,
S-Äthyl-N,N-diisobutylthiolcarbamat,
S-2,3-Dichlorallyl-N,N-diisopropylthiolcarbamat,
S-Propyl-N-butyl-N-äthylthiolcarbamat,
S-2,3,3-Trichlorallyl-N,N-diisopropylthiolcarbamat,
S-Propyl-N,N-dipropylthiolcarbamat,
S-Äthyl-N-äthyl-N-cyclohexylthiolcarbamat,
S-Äthyl-N-hexahydro-1H-azepin-1-carbothioat,

S-Isopropl-N,N-hexamethylen-thiolcarbamat,
S-(p-Chlorbenzyl)-N,N-diäthylthiolcarbamat,
N-Äthylthiocarbonyl-cis-decahydrochinolin,
N-Propylthiocarbonyl-decahydrochinaldin,
S-Äthyl-N,N-bis(n-butyl)-thiolcarbamat und
S-tert.-Butyl-N,N-bis-(n-propyl)-thiolcarbamat.

Chloracetamide: N-[1-Isopropyl-2-methylpropen-1-yl-(1)]-N-(2'-methoxyäthyl)-chloracetamid;

Zur Applikation werden die Verbindungen der Formel I oder Kombinationen von Verbindungen der Formel I mit den zu antagonisierenden Herbiziden zweckmässigerweise zusammen mit den in der Formulierungstechnik üblichen Hilfsmitteln eingesetzt und werden daher z. B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten, auch Verkapselungen in z. B. polymeren Stoffen, in bekannter Weise verarbeitet. Die Anwendungsverfahren wie Versprühen, Vernebeln, Verstäuben, Verstreuen, Bestreichen oder Giessen werden gleich wie die Art der zu verwendenden Mittel den angestrebten Zielen und den gegebenen Verhältnissen entsprechend gewählt.

Die Formulierungen, d.h. die den Wirkstoff der Formel I oder eine Kombination von Wirkstoff der Formel I mit zu antagonisierendem Herbizid und gegebenenfalls einen festen oder flüssigen Zusatzstoff enthaltenden Mittel, Zubereitungen oder Zusammensetzungen werden in bekannter Weise hergestellt, z. B. durch inniges Vermischen und/oder Vermahlen der Wirkstoffe mit Streckmitteln, wie z. B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z. B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Ether und Ester, wie Ethanol, Ethylenglykol, Ethylenglykolmonomethyl- oder -ethylether, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxydiertes Kokosnussöl oder Sojaöl; oder Wasser.

Als feste Trägerstoffe, z. B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z. B. Bimsstein, Ziegelbruch, Sepiolit oder Bentonit, als nicht sorptive Trägermaterialien z. B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach Art des zu formulierenden Wirkstoffs der Formel 1 und gegebenenfalls auch dem zu antagonisierenden Herbizid nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen seien die Alkali-, Erdalkali- oder gegebenenfalls substituierten Ammoniumsalze von höheren Fettsäuren ($C_{10}$-$C_{22}$), wie z. B. die Na- oder K-Salze der Öl- oder Stearinsäure, oder von natürlichen Fettsäuregemischen, die z. B. aus Kokosnuss- oder Talgöl gewonnen werden können, genannt. Ferner sind auch die Fettsäure-methyltaurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z. B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Ethylenoxyd-Addukten. Die sulfonierten Benzimidazolderivate enthalten vorzugsweise 2-Sulfonsäuregruppen und einen Fettsäurerest mit 8 bis 22 C-Atomen. Alkylarylsulfonate sind z. B. die Na-, Ca- oder Triethanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z. B. Salze des Phosphorsäureesters eines p-Nonylphenol-(4-14)-Ethylenoxid-Adduktes oder Phospholipide in Frage.

Als nichtionische Tenside kommen in erster Linie Polyglykoletherderivate von aliphatischen oder cycloaliphatischen Alkoholen, gesättigten oder ungesättigten Fettsäuren und Alkylphenolen in Frage, die 3 bis 30 Glykolethergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Ethylenglykolethergruppen und 10 bis 100 Propylenglykolethergruppen enthaltenden Polyethylenoxidaddukte an Polypropylenglykol, Ethylendiaminopolypropylenglykol und Alkylpolypropylenglykol mit 1 bis 10 Kohlenstoffatomen in der

Alkylkette. Die genannten Verbindungen enthalten üblicherweise pro Propylenglykol-Einheit 1 bis 5 Ethylenglykoleinheiten.

Als Beispiele nichtionischer Tenside seien Nonylphenolpolyethoxyethanole, Ricinusölpolyglykolether, Polypropylen-Polyethylenoxidaddukte, Tributylphenoxypolyethoxyethanol, Polyethylenglykol und Octylphenoxypolyethoxyethanol erwähnt.

Ferner kommen auch Fettsäureester von Polyoxyethylensorbitan wie das Polyoxyethylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Ethylsulfate vor, z. B. das Stearyltrimethylammoniumchlorid oder das Benzyldi(2-chlorethyl)-ethylammoniumbromid.

Die in der Formulierungstechnik gebräuchlichen Tenside sind u.a. in folgenden Publikationen beschrieben:
- "Mc Cutcheon's Detergents and Emulsifiers Annual" MC Publishing Corp., Ridgewood New Jersey, 1981
- Stache, H., "Tensid-Taschenbuch", Carl Hanser Verlag, München/Wien, 1981

Die agrochemischen Zubereitungen enthalten in der Regel 0,1 bis 99 Gewichtsprozent, insbesondere 0,1 bis 95 Gew.-%, Wirkstoff der Formel I oder Wirkstoffgemisch Antidot/Herbizid, 1 bis 99,9 Gew.-%, insbesondere 5 bis 99,8 Gew.-%, eines festen oder flüssigen Zusatzstoffes und 0 bis 25 Gew.-%, insbesondere 0,1 bis 25 Gew.-%, eines Tensides.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Während als Handelsware eher konzentrierte Mittel bevorzugt werden, verwendet der Endverbraucher in der Regel verdünnte Mittel. Die Anwendungsformen können bis hinab zu 0,001 % an Wirkstoff verdünnt werden. Die Aufwandmengen zu Antidot betragen in der Regel 0,01 bis 10 kg AS/ha, vorzugsweise 0,025 bis 5 kg AS/ha.

Insbesondere setzen sich bevorzugte Formulierungen folgendermassen zusammen: (% = Gewichtsprozent)

<u>Emulgierbare Konzentrate</u>

| | |
|---|---|
| Aktiver Wirkstoff: | 1 bis 20 %, bevorzugt 5 bis 10 % |
| oberflächenaktives Mittel: | 5 bis 30 %, vorzugsweise 10 bis 20 % |
| flüssiges Trägermittel: | 50 bis 94 %, vorzugsweise 70 bis 85 %. |

<u>Stäube:</u>

| | |
|---|---|
| Aktiver Wirkstoff: | 0,1 is 10 %, vorzugsweise 0,1 bis 1 % |
| festes Trägermittel: | 99,9 bis 90 %, vorzugsweise 99,9 bis 99 %. |

<u>Suspension-Konzentrate</u>

| | |
|---|---|
| Aktiver Wirkstoff: | 5 bis 75 %, vorzugsweise 10 bis 50 % |
| Wasser: | 94 bis 25 %, vorzugsweise 90 bis 30 % |
| oberflächenaktives Mittel: | 1 bis 40 %, vorzugsweise 2 bis 30 %. |

<u>Benetzbare Pulver</u>

| | |
|---|---|
| Aktiver Wirkstoff: | 0,5 bis 90 %, vorzugsweise 1 bis 80 % |
| oberflächenaktives Mittel: | 0,5 bis 20 %, vorzugsweise 1 bis 15 % |
| festes Trägermaterial: | 5 bis 95 %, vorzugsweise 15 bis 90 %. |

<u>Granulate:</u>

| | |
|---|---|
| Aktiver Wirkstoff: | 0,5 bis 30 %, vorzugsweise 3 bis 15 % |
| festes Trägermaterial: | 99,5 bis 70 %, vorzugsweise 97 bis 85 %. |

In den folgenden Beispielen ist die Temperatur in Celsiusgraden (°C), der Druck im Millibar (mbar) angegeben.

**Herstellung der Ausgansmateriale**

1-(2-Methoxyäthoxy)-2-propanol

$(CH_3\text{-}O\text{-}CH_2CH_2\text{-}O)\text{-}CH_2\text{-}CHOH\text{-}CH_3$

Eine Mischung von 310,6 g Äthylenglykolmonomethyläther, 232 g Propylenoxyd und 5 g festem Kaliumhydroxyd wird im Autoklaven eine Stunde lang bei 70°C gerührt. Nach dem Erkalten gibt man festes Kohlendioxyd zum Reaktionsgemisch, filtriert und destilliert über eine Fraktionierungskolonne. Die Hauptfraktion 1-(2-Methoxyäthoxy)-2-propanol siedet bei 79 - 85°C/16 mbar.

Ausbeute 239 g.

Auf analoge Weise lassen sich beispielsweise auch folgende Hydroxyalkoxy-derivate herstellen:

| | |
|---|---|
| $CH_3$-O-$CH_2CH_2$-O-$CH_2CH_2$-O-$CH_2$-CHOH-$CH_3$ | Sdp. 85° C/0,4 mbar |
| $CH_3$-O-$CH_2CH_2$-O-$CH_2CH_2$-O-$CH_2CH_2$-O-$CH_2$-CHOH-$CH_3$ | Sdp. 140° C/1 mbar |
| $C_2H_5$-O-$CH_2CH_2$-O-$CH_2CH_2$-O-$CH_2$-CHOH-$CH_3$ | Sdp. 117° C/16 mbar. |

2-(2-Äthoxyäthoxy)-äthylamin
($C_2H_5$-O-$CH_2CH_2$-O-$CH_2CH_2$-$NH_2$)

a) Zu einer Lösung von 805 g 2-(2-Äthoxyäthoxy)-äthanol in 10 ml Pyridin lässt man unter Rühren 487 ml Thionylchlorid eintropfen. Anschliessend wird die Mischung aufgeheizt, bis eine Innentemperatur von 80° C erreicht ist. Nachdem die anfangs lebhafte Gasentwicklung nach etwa 3 Stunden zum Stillstand gekommen ist, wird das Reaktionsgemisch unter Vakuum entgast. Es verbleiben 843 g 2-(2-Äthoxyäthoxy)-äthylchlorid.

b) 843 g 2-(2-Äthoxyäthoxy)-äthylchlorid werden in 1000 ml Äthanol aufgenommen und zusammen mit 750 ml Ammoniak in einem Autoklaven 15 Stunden lang bei 130° C gerührt. Nach dem Erkalten werden vorsichtig 240 g Natriumhydroxyd hinzugefügt. Das gesamte Gemisch wird filtriert und der Filterrückstand mit Alkohol gewaschen, durch azeotrope Destillation mit Toluol getrocknet und durch fraktionierte Destillation über eine Vigreux-Kolonne gereinigt. Die Hauptfraktion 2-(2-Äthoxyäthoxy)-äthylamin geht bei 73 - 76° C/23 mbar über. Ausbeute 382 g (48 % d.Th.).

Gemäss a) werden durch Umsetzung entsprechender Alkohole mit Thionylchlorid beispielsweise auch folgende Chloride hergestellt:

| | |
|---|---|
| $CH_3$-O-$CH_2CH_2$-O-$CH_2CH_2$-O-$CH_2CH_2Cl$ | Sdp. 75° C/0,3 mbar |
| $CH_3$-O-$CH_2CH_2$-O-$CH_2CHCl$-$CH_3$ | Sdp. 75 - 80° C/19 mbar |
| $CH_3$-O-$CH_2CH_2$-O-$CH_2CH_2$-O-$CH_2CH_2$-O-$CH_2CHCl$-$CH_3$ | Sdp. 125° C/1 mbar |
| $C_2H_5$-O-$CH_2CH_2$-O-$CH_2CH_2$-O-$CH_2CHCl$-$CH_3$ | Sdp. 125° C/16 mbar |
| $nC_4H_9$-O-$CH_2CH_2$-O-$CH_2CH_2Cl$ | Sdp. 105° C/24 mbar |

Gemäss b) werden durch Umsetzung entsprechender Chloride mit Ammoniak beispielsweise auch folgende Amine hergestellt:

| | |
|---|---|
| $CH_3$-O-$CH_2CH_2$-O-$CH_2CH_2$-$NH_2$ | Sdp. 70 - 74° C/15 mbar |
| $CH_3$-O-$CH_2CH_2$-O-$CH_2CH_2$-O-$CH_2CH(NH_2)$-$CH_3$ | Sdp. 78 - 79° C/0,3 mbar |
| $CH_3$-O-$CH_2CH_2$-O-$CH_2CH_2$-O-$CH_2CH_2$-$NH_2$ | Sdp. 74 - 75° C/0,7 mbar |
| $CH_3$-O-$CH_2CH_2$-O-$CH_2CH_2$-O-$CH_2CH_2$-O-$CH_2$-$CH(NH_2)$-$CH_3$ | Sdp. 98° C/0,7 mbar |
| $CH_3$-O-$CH_2CH_2$-O-CH(CH)-$CH_2$-$NH_2$ | Sdp. 70° C/16 mbar |
| $C_2H_5$-O-$CH_2CH_2$-O-$CH_2CH_2$-O-$CH_2CH(NH_2)$-$CH_3$ | Sdp. 70° C/0,7 mbar |
| $nC_4H_9$-O-$CH_2CH_2$-O-$CH_2CH_2$-$NH_2$ | Sdp. 95 - 97° C/17 mbar |

2-[2-(2-Hydroxyäthoxy)-äthoxy]-äthylamin
(HO-$CH_2CH_2$-O-$CH_2CH_2$-O)-$CH_2CH_2$-$NH_2$

Ein Gemisch aus 168,5 g 2-[2-(2-Hydroxyäthoxy)-äthoxy]-äthylchlorid in 150 ml Äthanol und 150 g Ammoniak werden 15 Stunden im Autoklaven bei 130° C gerührt. Nach dem Erkalten wird das Reaktionsgemisch langsam mit 43 g festem Natriumhydroxyd versetzt und filtriert. Der feste Rückstand wird mit Alkohol gewaschen. Das Filtrat wird eingedampft, durch azeotrope Destillation mit Toluol getrocknet und anschliessend unter Vakuum fraktioniert. Man erhält 61 g 2-[2-(2-Hydroxyäthoxy)-äthoxy]-äthylamin, welches bei 102 - 106° C/0,5 mbar siedet.

## Herstellungsbeispiele

**Beispiel 1** N-[2-(2-n-Butoxyäthoxy)-äthyl]-2,2-dichloracetamid (Nr. 2)

($Cl_2CH$-CONH-$CH_2CH_2$-O-$CH_2CH_2$-O-$nC_4H_9$)

Ein Gemisch von 26,5 g 2-(2-n-Butoxyäthoxy)-äthylamin und 23 ml Triäthylamin in 300 ml Toluol wird tropfenweise mit 22,2 g Dichloracetylchlorid versetzt. Nach einer Stunde werden dem Gemisch 20 ml Wasser beigefügt. Die organische Phase wird abgetrennt und über Natriumsulfat getrocknet. Nach Eindampfen am Vakuum wird das erhaltene Öl im Kugelrohr destilliert. Man erhält 36,1 g N-[2-(2-n-Butoxyäthoxy)-äthyl]-2,2-dichloracetamid mit einem Siedepunkt von 205° C/0,13 mbar.

**Beispiel 2:** N-Allyl-N-[2-(2-n-butoxyäthoxy)-äthyl]-2,2-dichloracetamid (Nr. 7)

$Cl_2CH$-CON($CH_2$-CH$=$$CH_2$)-$CH_2CH_2$-O-$CH_2CH_2$-O-$nC_4H_9$

Eine Lösung von 18,4 g Allylbromid, 10 g N-[2-(2-n-Butoxyäthoxy)-äthyl]-2,2-dichloracetamid und 3 g

Triäthylbenzylammoniumchlorid in 250 ml Methylenchlorid wird unter kräftigem Rühren mit 90 ml 50-%-iger Natronlauge versetzt. Drei Stunden nach Zugabe der Natronlauge wird die Reaktionsmischung auf 200 ml Eiswasser gegossen. Die organische Phase wird abgetrennt, über Natriumsulfat getrocknet und eingedampft. Der erhaltene Rückstand wird im Kugelrohr destilliert. Man erhält 9,4 g N-Allyl-N-[2-(2-n-butoxyäthoxy)-äthyl]-2,2-dichloracetamid, welches bei 195° C/0,04 mbar siedet.

Analog einer der vorstehend beschriebenen Methoden lassen sich auch die folgenden, in der Tabelle I zusammen mit den Verbindungen der vorstehenden Beispiele 4 und 3 aufgeführten Verbindungen der Formel I herstellen:

**Tabelle 1:**

$$Cl_2CH\text{-}CON(R^1)\text{-}(A^1\text{-}O)_m\text{-}(A^2\text{-}O)_n\text{-}(A^3\text{-}O)_o\text{-}(A^4\text{-}O)_p\text{-}R^2$$

| Verb. Nr. | $R^1$ | $A^1$ | m | $A^2$ | n | $A^3$ | o | $A^4$ | p | $R^2$ | physikal. Daten |
|---|---|---|---|---|---|---|---|---|---|---|---|
| 1 | H | $-CH_2CH_2-$ | 3 | - | 0 | - | 0 | - | 0 | $-CH_3$ | Sdp. 210° C/ 0,07 mbar |
| 2 | H | $-CH_2CH_2$ | 2 | - | 0 | - | 0 | - | 0 | $-nC_4H_9$ | Sdp. 205° C/ 0,13 mbar |
| 3 | H | $-CH_2CH_2-$ | 3 | - | 0 | - | 0 | - | 0 | H | Sdp. 220° C/° 0,27 mbar |
| 4 | H | $-CH_2CH_2-$ | 2 | - | 0 | - | 0 | - | 0 | H | Sdp. 205° C/ |
| 5 | $-CH_2-CH=CH_2$ | $-CH_2CH_2-$ | 2 | - | 0 | - | 0 | - | 0 | $-nC_4H_9$ | Sdp. 215° C/ 0,13 mbar |
| 6 | H | $-CH_2-CH(CH_3)-$ | 1 | $-CH_2CH_2-$ | 2 | - | 0 | - | 0 | $-nC_4H_9$ | Sdp. 175° C/ 0,05 mbar |
| 7 | $-CH_2-CH=CH_2$ | $-CH_2CH_2-$ | 2 | - | 0 | - | 0 | - | 0 | $-nC_4H_9$ | Sdp. 195° C/ 0,04 mbar |
| 8 | $-CH_2-C\equiv CH$ | $-CH_2CH_2-$ | 3 | - | 0 | - | 0 | - | 0 | $-CH_2-C\equiv CH$ | Sdp. 230° C/ 0,11 mbar |
| 9 | $-CH_2-C\equiv CH$ | $-CH_2CH_2-$ | 3 | - | 0 | - | 0 | - | 0 | $-CH_3$ | Sdp.215° C/ 0,13 mbar |
| 10 | 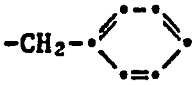 | $-CH_2CH_2-$ | 2 | - | 0 | - | 0 | - | 0 | $-nC_4H_9$ | Sdp. 250° C/ 0,13 mbar |
| 11 | $-CH_2-CH=CH_2$ | $-CH_2CH_2-$ | 3 | - | 0 | - | 0 | - | 0 | $-CH_3$ | $n^{23}_D=1{,}4838$ |
| 12 | $-CH_2CH_2CH_3$ | $-CH_2CH_2-$ | 2 | - | 0 | - | 0 | - | 0 | $-nC_4H_9$ | Sdp. 195° C/ 0,11 mbar |
| 13 | $-CH_2CH_2-O-CH_3$ | $-CH_2CH_2-$ | 3 | - | 0 | - | 0 | - | 0 | $-CH_3$ | Sdp. 215° C/ 0,11 mbar |
| 14 | 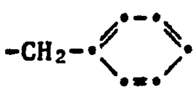 | $-CH_2CH_2-$ | 3 | - | 0 | - | 0 | - | 0 | 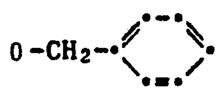 | Sdp. 250° C/ 0,13 mbar |
| 15 | $-CH2-CH=CH_2$ | $-CH_2CH_2-$ | 3 | - | 0 | - | 0 | - | 0 | $-CH_2CH=CH_2$ | $n^{23}_D=1{,}4883$ |
| 16 | 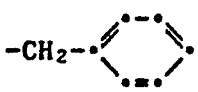 | $-CH_2CH_2-$ | 3 | - | 0 | - | 0 | - | 0 | $-CH_3$ | Sdp. 250° C/ 0,13 mbar |
| 17 | $-CH_2-CH=CH_2$ | $-CH_2CH_2-$ | 2 | - | 0 | - | 0 | - | 0 | $-CH_2-CH=CH_2$ | Sdp. 180° C/ 0,13 mbar |
| 18 | $-CH_3$ | $-CH_2CH_2$ | 3 | - | 0 | - | 0 | - | 0 | $-CH_3$ | Sdp. 215° C/ 0,13 mbar |
| 19 | $-CH_3$ | $-CH_2CH_2-$ | 2 | - | 0 | - | 0 | - | 0 | $-CH_3$ | |
| 20 | $-CH_2-CH=CH_2$ | $-CH_2CH_2-$ | 2 | $-CH_2-$ | 1 | $-CH_2CH_2-$ | 1 | - | 0 | $-CH_3$ | |
| 21 | $-CH_2-CH=CH_2$ | $-CH_2CH_2-$ | 1 | $-CH_2-$ | 1 | $-CH_2CH_2-$ | 1 | - | 0 | $-CH_3$ | |
| 22 | $-CH_2-O-CH_2CH_2-O-CH_3$ | $-CH_2CH_2-$ | 1 | $-CH_2-$ | 1 | $-CH_2CH_2-$ | 1 | - | 0 | $-CH_3$ | |
| 23 | $-CH_2-CH=CH_2$ | $-CH_2CH_2-$ | 3 | $-CH_2-$ | 1 | $-CH_2CH_2-$ | 1 | - | 0 | $-CH_3$ | |

**Formulierungsbeispiel für flüssige Wirkstoffe der Formel I**
(% = Gewichtsprozent)

| 3. Emulsions-Konzentrate | a) | b) | c) |
|---|---|---|---|
| Wirkstoff aus Tabelle 1 | 25 % | 40 % | 50 % |
| Ca-Dodecylbenzolsulfonat | 5 % | 8 % | 6 % |
| Ricinusöl-polyethylenglykolether (36 Mol ÄO) | 5 % | - | - |
| Tributylphenol-polyethylenglykolether (30 Mol ÄO) | - | 12 % | 4 % |
| Cyclohexanon | - | 15 % | 20 % |
| Xylolgemisch | 65 % | 25 % | 20 % |

Aus solchen Konzentraten können durch Verdünnen mit Wasser Emulsionen jeder gewünschten Konzentration hergestellt werden.

| 4. Lösungen | a) | b) | c) | d) |
|---|---|---|---|---|
| Wirkstoff aus Tabelle 1 | 80 % | 10 % | 5 % | 95 % |
| Ethylenglykol-monomethyl-ether | 20 % | - | - | - |
| Polyethylenglykol MG 400 | - | 70 % | - | - |
| N-Methyl-2-pyrrolidon | - | 20 % | - | - |
| Epoxydiertes Kokosnussöl | - | - | 1 % | 5 % |
| Benzin (Siedegrenzen 160 - 190°) | - | - | 94 % | - |

Die Lösungen sind zur Anwendung in Form kleinster Tropfen geeignet.

| 5. Granulate | a) | b) |
|---|---|---|
| Wirkstoff aus Tabelle 1 | 5 % | 10 % |
| Kaolin | 94 % | - |
| Hochdisperse Kieselsäure | 1 % | - |
| Attapulgit | - | 90 % |

Der Wirkstoff wird in Methylenchlorid gelöst, auf den Träger aufgesprüht und das Lösungsmitel anschliessend im Vakuum abgedampft.

| 6. Stäubemittel | a) | b) |
|---|---|---|
| Wirkstoff aus Tabelle 1 | 2 % | 5 % |
| Hochdisperse Kieselsäure | 1 % | 5 % |
| Talkum | 97 % | - |
| Kaolin | - | 90 % |

Durch inniges Vermischen der Trägerstoffe mit dem Wirkstoff erhält man gebrauchsfertige Stäubemitel.

**Formulierungsbeispiele für feste Wirkstoffe der Formel I**
(% = Gewichtsprozent)

| 7. Spritzpulver | a) | b) | c) |
|---|---|---|---|
| Wirkstoff aus Tabelle 1 | 25 % | 50 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10 % |
| Octylphenolpolyethylenglykolether (7 - 8 Mol ÄO) | - | 2 % | - |
| Hochdisperse Kieselsäure | 5 % | 10 % | 10 % |
| Kaolin | 62 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| 8. Emulsions-Konzentrate | |
|---|---|
| Wirkstoff aus Tabelle 1 | 10 % |
| Octylphenolpolyethylenglykolether (4 - 5 Mol ÄO) | 3 % |
| Ca-Dodecylbenzolsulfonat | 3 % |
| Ricinusölpolyglykolether (35 Mol ÄO) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden.

| 9. Stäubemittel | a) | b) |
|---|---|---|
| Wirkstoff aus Tabelle 1 | 5 % | 8 % |
| Talkum | 95 % | - |
| Kaolin | - | 92 % |

Man erhält anwendungsfertige Stäubemittel, indem der Wirkstoff mit den Trägerstoffen vermischt und auf einer geeigneten Mühle vermahlen wird.

| 10. Extruder-Granulate | |
|---|---|
| Wirkstoff aus Tabelle 1 | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert und anschliessend im Luftstrom getrocknet.

| 11. Umhüllungs-Granulate | |
|---|---|
| Wirkstoff aus Tabelle 1 | 3 % |
| Polyethylenglykol (MG 200) | 3 % |
| Kaolin | 94 % |

Der fein gemahlene Wirkstoff wird in einem Mischer auf das mit Polyethylenglykol angefeuchtete Kaolin gleichmässig aufgetragen. Auf diese Weise erhält man staubfreie Umhüllungs-Granulate.

| 12. Suspensions-Konzentrate | |
|---|---|
| Wirkstoff aus Tabelle 1 | 40 % |
| Ethylenglykol | 10 % |
| Nonylphenolpolyethylenglykolether (15 Mol ÄO) | 6 % |
| Na-Ligninsulfonat | 10 % |
| Carboxymethylcellulose | 1 % |
| 37-%-ige wässrige Formaldehyd-Lösung | 0,2 % |
| Silikonöl in Form einer 75-%-igen wässrigen Emulsion | 0,8 % |
| Wasser | 32 % |

Der feingemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

**Formulierungsbeispiele für Wirkstoffgemische (flüssig)**
(% = Gewichtsprozent)

| 13. Emulsions-Konzentrate | a) | b) | c) |
|---|---|---|---|
| Wirkstoffgemisch:Antidot aus Tabelle 1 und ein Herbizid der Formel XI, XII oder XIII im Verhältnis 1 : 1 | 25 % | 40 % | 50 % |
| Ca-Dodecylbenzolsulfonat | 5 % | 8 % | 6 % |
| Ricinusöl-polyethylenglykolether (36 Mol ÄO) | 5 % | - | - |
| Tributylphenol-polyethylenglykolether (30 Mol ÄO) | - | 12 % | 4 % |
| Cyclohexanon | - | 15 % | 20 % |
| Xylolgemisch | 65 % | 25 % | 20 % |

Aus solchen Konzentraten können durch Verdünnen mit Wasser Emulsionen jeder gewünschten Konzentration hergestellt werden.

| 14. Emulsions-Konzentrate | a) | b) | c) |
|---|---|---|---|
| Wirkstoffgemisch: Antidot aus Tabelle 1 und ein Herbizid der Formel XI, XII oder XIII im Verhältnis 1 : 3 | 25 % | 40 % | 50 % |
| Ca-Dodecylbenzolsulfonat | 5 % | 8 % | 6 % |
| Ricinusöl-polyethylenglykolether (36 Mol ÄO) | 5 % | - | - |
| Tributylphenol-polyethylenglykolether (30 Mol ÄO) | - | 12 % | 4 % |
| Cyclohexanon | - | 15 % | 20 % |
| Xylolgemisch | 65 % | 25 % | 20 % |

Aus solchen Konzentraten können durch Verdünnen mit Wasser Emulsionen jeder gewünschten Konzentration hergestellt werden.

| 15. Emulsions-Konzentrate | a) | b) | c) |
|---|---|---|---|
| Wirkstoffgemisch: Antidot aus Tabelle 1 und ein Herbizid der Formel XI, XII oder XIII im Verhältnis 2 : 1 | 25 % | 40 % | 50 % |
| Ca-Dodecylbenzolsulfonat | 5 % | 8 % | 6 % |
| Ricinusöl-polyethylenglykolether (36 Mol ÄO) | 5 % | - | - |
| Tributylphenol-polyethylenglykolether (30 Mol ÄO) | - | 12 % | 4 % |
| Cyclohexanon | - | 15 % | 20 % |
| Xylolgemisch | 65 % | 25 % | 20 % |

Aus solchen Konzentraten können durch Verdünnen mit Wasser Emulsionen jeder gewünschten Konzentration hergestellt werden.

| 16. Emulsions-Konzentrate | a) | b) | c) |
|---|---|---|---|
| Wirkstoffgemisch: Antidot aus Tabelle 1 und 2-Chlor-N-(2-äthyl-6-methylphenyl)-N-(2-methoxy-1-methyläthyl)-acetamid im Verhältnis 1 : 1 | 25 % | 40 % | 50 % |
| Ca-Dodecylbenzolsulfonat | 5 % | 8 % | 6 % |
| Ricinusöl-polyethylenglykolether (36 Mol ÄO) | 5 % | - | - |
| Tributylphenol-polyethylenglykolether (30 Mol ÄO) | - | 12 % | 4 % |
| Cyclohexanon | - | 15 % | 20 % |
| Xylolgemisch | 65 % | 25 % | 20 % |

Aus solchen Konzentraten können durch Verdünnen mit Wasser Emulsionen jeder gewünschten Konzentration hergestellt werden.

| 17. Emulsions-Konzentrat | a) | b) | c) |
|---|---|---|---|
| Wirkstoffgemisch: Antidot aus Tabelle 1 und 2-Chlor-N-(2-äthyl-6-methylphenyl)-N-(2-methoxy-1-methyläthyl)-acetamid im Verhältnis 1 : 3 | 25 % | 40 % | 50 % |
| Ca-Dodecylbenzolsulfonat | 5 % | 8 % | 6 % |
| Ricinusöl-polyethylenglykolether (36 Mol ÄO) | 5 % | - | - |
| Tributylphenol-polyethylenglykolether (30 Mol ÄO) | - | 12 % | 4 % |
| Cyclohexanon | - | 15 % | 20 % |
| Xylolgemisch | 65 % | 25 % | 20 % |

Aus solchen Konzentraten können durch Verdünnen mit Wasser Emulsionen jeder gewünschten Konzentration hergestellt werden.

| 18. Lösungen | a) | b) | c) | d) |
|---|---|---|---|---|
| Wirkstoffgemisch: Antidot aus Tabelle 1 und ein Herbizid der Formel XI, XII oder XIII im Verhältnis 1 : 4 | 80 % | 10 % | 5 % | 95 % |
| Ethylenglykol-monomethyl-ether | 20 % | - | - | - |
| Polyethylenglykol MG 400 | - | 70 % | - | - |
| N-Methyl-2-pyrrolidon | - | 20 % | - | - |
| Epoxydiertes Kokosnussöl | - | - | 1 % | 5 % |
| Benzin (Siedegrenzen 160 - 190°C) | - | - | 94 % | - |

Die Lösungen sind zur Anwendung in Form kleinster Tropfen geeignet.

| 19. Lösungen | a) | b) | c) | d) |
|---|---|---|---|---|
| Wirkstoffgemisch: Antidot aus Tabelle 1 und ein Herbizid der Formel XI, XII oder XIII im Verhältnis 5 : 2 | 80 % | 10 % | 5 % | 95 % |
| Ethylenglykol-monomethyl-ether | 20 % | - | - | - |
| Polyethylenglykol MG 400 | - | 70 % | - | - |
| N-Methyl-2-pyrrolidon | - | 20 % | - | - |
| Epoxydiertes Kokosnussöl | - | - | 1 % | 5 % |
| Benzin (Siedegrenzen 160 - 190° C) | - | - | 94 % | - |

Die Lösungen sind zur Anwendung in Form kleinster Tropfen geeignet.

| 20. Lösungen | a) | b) | c) | d) |
|---|---|---|---|---|
| Wirkstoffgemisch: Antidot aus Tabelle 1 und ein Herbizid der Formel XI, XII oder XIII im Verhältnis 1 : 1 | 80 % | 10 % | 5 % | 95 % |
| Ethylenglykol-monomethyl-ether | 20 % | - | - | - |
| Polyethylenglykol MG 400 | - | 70 % | - | - |
| N-Methyl-2-pyrrolidon | - | 20 % | - | - |
| Epoxydiertes Kokosnussöl | - | - | 1 % | 5 % |
| Benzin (Siedegrenzen 160 - 190° C) | - | - | 94 % | - |

Die Lösungen sind zur Anwendung in Form kleinster Tropfen geeignet.

| 21. Lösungen | a) | b) | c) | d) |
|---|---|---|---|---|
| Wirkstoffgemisch: Antidot aus Tabelle 1 und 2-Chlor-N-(2-äthyl-6-methylphenyl)-N-(2-methoxy-1-methyläthyl)-acetamid im Verhältnis 1 : 1 | 80 % | 10 % | 5 % | 95 % |
| Ethylenglykol-monomethyl-ether | 20 % | - | - | - |
| Polyethylenglykol MG 400 | - | 70 % | - | - |
| N-Methyl-2-pyrrolidon | - | 20 % | - | - |
| Epoxydiertes Kokosnussöl | - | - | 1 % | 5 % |
| Benzin (Siedegrenzen 160 - 190° C) | - | - | 94 % | - |

Die Lösungen sind zur Anwendung in Form kleinster Tropfen geeignet.

| 22. Lösungen | a) | b) | c) | d) |
|---|---|---|---|---|
| Wirkstoffgemisch: Antidot aus Tabelle 1 und 2-Chlor-N-(2-äthyl-6-methylphenyl)-N-(2-methoxy-1-methyläthyl)-acetamid im Verhältnis 1 : 4 | 80 % | 10 % | 5 % | 95 % |
| Ethylenglykol-monomethyl-ether | 20 % | - | - | - |
| Polyethylenglykol MG 400 | - | 70 % | - | - |
| N-Methyl-2-pyrrolidon | - | 20 % | - | - |
| Epoxydiertes Kokosnussöl | - | - | 1 % | 5 % |
| Benzin (Siedegrenzen 160 - 190° C) | - | - | 94 % | - |

Die Lösungen sind zur Anwendung in Form kleinster Tropfen geeignet.

| 23. Granulate | a) | b) |
|---|---|---|
| Wirkstoffgemisch: Antidot aus Tabelle 1 und ein Herbizid der Formel XI, XII oder XIII im Verhältnis 1 : 1 | 5 % | 10 % |
| Kaolin | 94 % | - |
| Hochdisperse Kieselsäure | 1 % | - |
| Attapulgit | - | 90 % |

Der Wirkstoff wird in Methylenchlorid gelöst, auf den Träger aufgesprüht und das Lösungsmittel anschliessend im Vakuum abgedampft.

| 24. Granulate | a) | b) |
|---|---|---|
| Wirkstoffgemisch: Antidot aus Tabelle 1 und 2-Chlor-N-(2-äthyl-6-methylphenyl)-N-(2-methoxy-1-methyläthyl)-acetamid im Verhältnis 1 : 1 | 5 % | 10 % |
| Kaolin | 94 % | - |
| Hochdisperse Kieselsäure | 1 % | - |
| Attapulgit | - | 90 % |

Der Wirkstoff wird in Methylenchlorid gelöst, auf den Träger aufgesprüht und das Lösungsmittel anschliessend im Vakuum abgedampft.

| 25. Stäubemittel | a) | b) |
|---|---|---|
| Wirkstoffgemisch: Antidot aus Tabelle 1 und ein Herbizid der Formel XI, XII oder XIII im Verhältnis 1 : 1 | 2 % | 5 % |
| Hochdisperse Kieselsäure | 1 % | 5 % |
| Talkum | 97 % | - |
| Kaolin | - | 90 % |

Durch inniges Vermischen der Trägerstoffe mit dem Wirkstoff erhält man gebrauchsfertige Stäubemitel.

**Formulierungsbeispiele für Wirkstoffgemische (fest)**
(% = Gewichtsprozent)

| 26. Spritzpulver | a) | b) | c) |
|---|---|---|---|
| Wirkstoffgemisch: Antidot aus Tabelle 1 und ein Herbizid der Formel XI, XII oder XIII im Verhältnis 1 : 1 | 25 % | 50 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10 % |
| Octylphenolpolyethylenglykolether (7 - 8 Mol ÄO) | - | 2 % | - |
| Hochdisperse Kieselsäure | 5 % | 10 % | 10 % |
| Kaolin | 62 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| 27. Spritzpulver | a) | b) | c) |
|---|---|---|---|
| Wirkstoffgemisch: Antidot aus Tabelle 1 und ein Herbizid der Formel XI, XII oder XIII im Verhältnis 1 : 4 | 25 % | 50 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10 % |
| Octylphenolpolyethylenglykolether (7 - 8 Mol ÄO) | - | 2 % | - |
| Hochdisperse Kieselsäure | 5 % | 10 % | 10 % |
| Kaolin | 62 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| 28. Spritzpulver | a) | b) | c) |
|---|---|---|---|
| Wirkstoffgemisch: Antidot aus Tabelle 1 und ein Herbizid der Formel XI, XII oder XIII im Verhältnis 3 : 1 | 25 % | 50 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10 % |
| Octylphenolpolyethylenglykolether (7 - 8 Mol ÄO) | - | 2 % | - |
| Hochdisperse Kieselsäure | 5 % | 10 % | 10 % |
| Kaolin | 62 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

29. Emulsions-Konzentrate

| | |
|---|---|
| Wirkstoffgemisch: Antidot aus Tabelle 1 und ein Herbizid der Formel XI, XII oder XIII im Verhältnis 1 : 1 | 10 % |
| Octylphenolpolyethylenglykolether (4 - 5 Mol ÄO) | 3 % |
| Ca-Dodecylbenzolsulfonat | 3 % |
| Ricinusölpolyglykolether (35 Mol ÄO) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden.

30. Emulsions-Konzentrate

| | |
|---|---|
| Wirkstoffgemisch: Antidot aus Tabelle 1 und ein Herbizid der Formel XI, XII oder XIII im Verhältnis 5 : 2 | 10 % |
| Octylphenolpolyethylenglykolether (4 - 5 Mol ÄO) | 3 % |
| Ca-Dodecylbenzolsulfonat | 3 % |
| Ricinusölpolyglykolether (35 Mol ÄO) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden.

31. Emulsions-Konzentrate

| | |
|---|---|
| Wirkstoffgemisch: Antidot aus Tabelle 1 und ein Herbizid der Formel XI, XII oder XIII im Verhältnis 1 : 4 | 10 % |
| Octylphenolpolyethylenglykolether (4 - 5 Mol ÄO) | 3 % |
| Ca-Dodecylbenzolsulfonat | 3 % |
| Ricinusölpolyglykolether (35 Mol ÄO) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden.

| 32. Stäubemittel | a) | b) |
|---|---|---|
| Wirkstoffgemisch: Antidot aus Tabelle 1 und ein Herbizid der Formel XI, XII oder XIII im Verhältnis 1 : 1 | 5 % | 8 % |
| Talkum | 95 % | - |
| Kaolin | - | 92 % |

Man erhält anwendungsfertige Stäubemittel, indem der Wirkstoff mit den Trägerstoffen vermischt und auf einer geeigneten Mühle vermahlen wird.

33. Extruder-Granulate

| | |
|---|---|
| Wirkstoffgemisch: Antidot aus Tabelle 1 und ein Herbizid der Formel XI, XII oder XIII im Verhältnis 1 : 1 | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert und anschliessend im Luftstrom getrocknet.

34. Umhüllungs-Granulate

| | |
|---|---|
| Wirkstoffgemisch: Antidot aus Tabelle 1 und ein Herbizid der Formel XI, XII oder XIII im Verhältnis 1 : 1 | 3 % |
| Polyethylenglykol (MG 200) | 3 % |
| Kaolin | 94 % |

Der fein gemahlene Wirkstoff wird in einem Mischer auf das mit Polyethylenglykol angefeuchtete Kaolin gleichmässig aufgetragen. Auf diese Weise erhält man staubfreie Umhüllungs-Granulate.

35. Suspensions-Konzentrate

| | |
|---|---|
| Wirkstoffgemisch: Antidot aus Tabelle 1 und ein Herbizid der Formel XI, XII oder XIII im Verhältnis 1 : 1 | 40 % |
| Ethylenglykol | 10 % |
| Nonylphenolpolyethylenglykolether (15 Mol ÄO) | 6 % |
| Na-Ligninsulfonat | 10 % |
| Carboxymethylcellulose | 1 % |
| 37-%-ige wässrige Formaldehyd-Lösung | 0,2 % |
| Silikonöl in Form einer 75-%-igen wässrigen Emulsion | 0,8 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

36. Suspensions-Konzentrate

| | |
|---|---|
| Wirkstoffgemisch: Antidot aus Tabelle 1 und ein Herbizid der Formel XI, XII oder XIII im Verhältnis 1 : 4 | 40 % |
| Ethylenglykol | 10 % |
| Nonylphenolpolyethylenglykolether (15 Mol ÄO) | 6 % |
| Na-Ligninsulfonat | 10 % |
| Carboxymethylcellulose | 1 % |
| 37-%-ige wässrige Formaldehyd-Lösung | 0,2 % |
| Silikonöl in Form einer 75-%-igen wässrigen Emulsion | 0,8 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

37. Suspensions-Konzentrate

| | |
|---|---|
| Wirkstoffgemisch: Antidot aus Tabelle 1 und ein Herbizid der Formel XI, XII oder XIII im Verhältnis 3 : 1 | 40 % |
| Ethylenglykol | 10 % |
| Nonylphenolpolyethylenglykolether (15 Mol ÄO) | 6 % |
| Na-Ligninsulfonat | 10 % |
| Carboxymethylcellulose | 1 % |
| 37-%-ige wässrige Formaldehyd-Lösung | 0,2 % |
| Silikonöl in Form einer 75-%-igen wässrigen Emulsion | 0,8 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

**Biologisches Beispiel**

**Beispiel 38:**

Vorauflaufapplikation von Safener und Herbizid in Tankmischung

Plastiktöpfe (oberer Durchmesser 9 cm, Inhalt 315 $cm^3$) werden mit sandig-toniger Lehmerde gefüllt. Maissamen der Sorte "LG 5" werden eingesät, mit Erde bedeckt und anschliessend angegossen. Die als Safener zu prüfende Substanz wird in Wasser gelöst und in einer Aufwandmenge, welche 1,5 kg AS/ha entspricht, zusammen mit 2-Chlor-N-(2-äthyl-6-methylphenyl)-N-(2-methoxy-1-methyläthyl)-acetamid in einer Aufwandmenge, welche 8 kg AS/ha entspricht, in insgesamt 550 l Brühe/ha auf die Bodenoberfläche aufgesprüht. Die Testpflanzen werden im Gewächshaus bei 13 Stunden Licht (24 - 26°C) und 11 Stunden Dunkelheit (20 - 22°C) und einer relativen Luftfeuchtigkeit von etwa 40 - 60 % kultiviert. Zwei Wochen nach Aussaat und Applikation der Safener-Herbizid-Mischung wird die Schutzwirkung des Safeners in Prozent bonitiert. Als Referenzen dienen dabei Pflanzen, welche nur mit Herbizid behandelt sind, sowie vollständig unbehandelte Kontrollen. Die Ergebnisse zeigt die folgende Tabelle:

**Tabelle 2**

| Verbindung Nr. | Relative Schutzwirkung in % gegenüber Herbizid allein |
|---|---|
| 2 | 50 |
| 4 | 37,5 |
| 5 | 62,5 |
| 6 | 62,5 |
| 7 | 75 |
| 8 | 62,5 |
| 9 | 62,5 |
| 10 | 62,5 |
| 11 | 75 |
| 12 | 62,5 |
| 14 | 50 |
| 15 | 50 |
| 16 | 62,5 |
| 17 | 50 |
| 18 | 50 |

**Patentansprüche**

1. Verbindungen der Formel I

$$Cl_2CH\text{-}CON(R^1)\text{-}(A^1\text{-}O)_m\text{-}(A^2\text{-}O)_n\text{-}(A^3\text{-}O)_o\text{-}(A^4\text{-}O)_p\text{-}R^2 \qquad (I)$$

worin

$R_1$ Wasserstoff, Benzyl, unsubstituiertes oder durch Substituenten aus der Gruppe Chlor, Cyan, $C_1$-$C_6$-Alkoxy, $C_1$-$C_4$-Alkoxy-$C_1$-$C_4$-alkoxy, Carboxy oder Carbalkoxy mit 1 bis 6 Kohlenstoffatomen im Alkylteil ein- oder mehrfach substituiertes $C_1$-$C_6$-Alkyl, unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_3$-$C_6$-Alkenyl oder unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_3$-$C_6$-Alkinyl,

$R^2$ Wasserstoff, Benzyl, unsubstituiertes oder durch Chlor ein- oder mehrfach substituiertes Alkylcarbonyl mit 1 bis 6 Kohlenstoffatomen im Alkylteil, unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_1$-$C_6$-Alkyl, unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_2$-$C_6$-Alkenyl oder unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_2$ $C_6$-Alkinyl,

$A^1$ einen $C_2$-$C_4$-Alkylenrest,

$A^2$, $A^3$ und $A^4$ unabhängig voneinander einen $C_1$-$C_4$-Alkylenrest bedeuten,

m für eine Zahl von 1 bis 5,

n, o und p unabhängig voneinander für eine Zahl von 0 bis 3 stehen, und

die Summe von m, n, o und p eine Zahl von 2 bis 5 ergibt.

2. Verbindungen nach Anspruch 1, dadurch gekennzeichnet, dass

$A^1$ für einen Äthylenrest,

m für die Zahl 2 oder 3 und

n, o und p für die Zahl 0 stehen und

$R^1$ und $R^2$ die im Anspruch 1 angegebenen Bedeutungen haben.

3. Verbindungen nach Anspruch 1, dadurch gekennzeichnet, dass $R^1$ für Benzyl, unsubstituiertes oder durch Substituenten aus der Gruppe Chlor, Cyan, $C_1$-$C_6$-Alkoxy, $C_1$-$C_4$-Alkoxy-$C_1$-$C_4$-alkoxy, Carboxy oder Carbalkoxy mit 1 bis 6 Kohlenstoffatomen im Alkylteil ein- oder mehrfach substituiertes $C_1$-$C_6$-Alkyl, unsubstituiertes oder durch Substituenten aus der Gruppe Chlor, Cyan, $C_1$-$C_6$-Alkoxy, Carboxy oder Carbalkoxy mit 1 bis 6 Kohlenstoffstomen im Alkylteil ein- oder mehrfach substituiertes $C_3$-$C_6$-Alkenyl oder unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_3$-$C_6$-Alkinyl,

$A^1$ für einen Äthylenrest,

m für die Zahl 2 oder 3 und
n, o und p für die Zahl 0 stehen und
$R^2$ die im Anspruch 1 angegebenen Bedeutungen hat.

4. Verbindungen nach Anspruch 1, dadurch gekennzeichnet, dass
$R^1$ Benzyl, unsubstituiertes oder durch Substituenten aus der Gruppe Chlor, Cyan, $C_1$-$C_6$-Alkoxy, $C_1$-$C_4$-Alkoxy-$C_1$-$C_4$-alkoxy, Carboxy oder Carbalkoxy mit 1 bis 6 Kohlenstoffatomen im Alkylteil ein- oder mehrfach substituiertes $C_1$-$C_6$-Alkyl, unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_3$-$C_6$-Alkenyl oder unsubstituiertes oder durch Substituenten aus der Gruppe Chlor, $C_1$-$C_6$-Alkoxy, Carboxy oder Carbalkoxy mit 1 bis 6 Kohlenstoffatomen im Alkylteil ein- oder mehrfach substituiertes $C_3$-$C_6$-Alkinyl,
$R^2$ Benzyl, unsubstituiertes oder durch Chlor ein- oder mehrfach substituiertes Alkylcarbonyl mit 1 bis 6 Kohlenstoffatomen im Alkylteil, unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_1$-$C_6$-Alkyl, unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_2$-$C_6$-Alkenyl oder unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_2$-$C_6$-Alkinyl bedeutet und
$A^1$, $A^2$, $A^3$, $A^4$, m, n, o und p die im Anspruch 1 angegebenen Bedeutungen haben.

5. Verbindungen nach Anspruch 1, dadurch gekennzeichnet, dass
$A^1$ für einen Äthylenrest,
m für die Zahl 2 oder 3 und
n, o und p für die Zahl 0 und
$R_2$ für Benzyl, unsubstituiertes oder durch Chlor ein- oder mehrfach substituiertes Alkylcarbonyl mit 1 bis 6 Kohlenstoffatomen im Alkylteil, unsubstituiertes oder durch Substituenten aus der Gruppe Chlor, Cyan, $C_1$-$C_6$-Alkoxy, $C_1$-$C_4$-Alkoxy-$C_1$-$C_4$-alkoxy, Carboxy oder Carbalkoxy mit 1 bis 6 Kohlenstoffatomen im Alkylteil ein- oder mehrfach substituiertes $C_1$-$C_6$-Alkyl, unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_2$-$C_6$-Alkenyl oder unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_2$-$C_6$-Alkinyl stehen und
$R^1$ die im Anspruch 1 angegebenen Bedeutungen hat.

6. Verbindungen nach Anspruch 1, dadurch gekennzeichnet, dass
$R^1$ Benzyl, unsubstituiertes oder durch Substituenten aus der Gruppe Chlor, Cyan, $C_1$-$C_6$-Alkoxy, $C_1$-$C_4$-Alkoxy-$C_1$-$C_4$-alkoxy, Carboxy oder Carbalkoxy mit 1 bis 6 Kohlenstoffatomen im Alkylteil ein- oder mehrfach substituiertes $C_1$-$C_6$-Alkyl, unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_3$-$C_6$-Alkenyl oder unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_3$-$C_6$-Alkinyl,
$R^2$ Benzyl, unsubstituiertes oder durch Chlor ein- oder mehrfach substituiertes Alkylcarbonyl mit 1 bis 6 Kohlenstoffatomen im Alkylteil, unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_1$-$C_6$-Alkyl, unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_2$-$C_6$-Alkenyl oder unsubstituiertes oder durch Substituenten aus der Gruppe Chlor, Cyan, $C_1$-$C_6$-Alkoxy, Carboxy oder Carbalkoxy mit 1 bis 6 Kohlenstoffatomen im Alkylteil ein- oder mehrfach substituiertes $C_2$-$C_6$-Alkinyl und
$A^1$ einen Äthylenrest,
m die Zahl 2 oder 3 und
n, o und p die Zahl 0 bedeuten.

7. Verbindungen nach Anspruch 1, dadurch gekennzeichnet, dass
$R^1$ Wasserstoff, Benzyl, $C_1$-$C_4$-Alkyl, $C_1$-$C_4$-Alkoxy-$C_1$-$C_4$-alkyl, $C_1$-$C_4$-Alkoxy-$C_1$-$C_4$-alkoxy-$C_1$-$C_4$-alkyl, Allyl oder 2-Propinyl,
$R^2$ Wasserstoff, Benzyl, $C_1$-$C_4$-Alkyl, Allyl oder 2-Propinyl,
$A^1$ einen Äthylen- oder 2-Methyläthylenrest,
$A^2$ einen Methylen- oder Äthylenrest,
$A^3$ einen Äthylenrest,
m eine Zahl von 1 bis 3,
n eine Zahl von 0 bis 2,
o die Zahl 0 oder 1 und
p die Zahl 0 bedeuten und
die Summe von m, n und o eine Zahl von 2 bis 5 ergibt.

8. Verbindungen nach Anspruch 7, dadurch gekennzeichnet, dass
$R^1$ Wasserstoff, Benzyl, $C_1$-$C_3$-Alkyl, 2-Methoxyäthyl, Allyl oder 2-Propinyl,
$A^2$ einen Äthylenrest,

n die Zahl 0 oder 2 und
n die Zahl 0 bedeuten,
$R^2$, $A^1$, m und p die im Anspruch 7 angegebenen Bedeutungen haben und
die Summe von m und n die Zahl 2 oder 3 ergibt.

9. Verbindungen nach Anspruch 8, dadurch gekennzeichnet, dass
$R^1$ Wasserstoff, Benzyl, n-Propyl, Allyl oder 2-Propinyl,
$R^2$ Methyl, n-Butyl oder 2-Propinyl,
$A^1$ einen Äthylenrest,
m die Zahl 2 oder 3 und
n, o und p die Zahl 0 bedeuten.

10. Verbindungen nach Anspruch 8, dadurch gekennzeichnet, dass
$R^1$ Wasserstoff, Benzyl, n-Propyl, Allyl oder 2-Propinyl,
$R^2$ Methyl, n-Butyl oder 2-Propinyl, $A^1$ einen 2-Methyläthylenrest,
$A^2$ einen Äthylenrest,
m die Zahl 1,
n die Zahl 2 und
o und p die Zahl 0 bedeuten.

11. Eine Verbindung der Formel I nach Anspruch 1, ausgewählt aus der Gruppe
N-{2-[2-(2-Methoxyäthoxy)-äthoxy]-äthyl}-2,2-dichloracetamid,
N-[2-(2-n-Butoxyäthoxy)-äthyl]-2,2-dichloracetamid,
N-{2-[2-(2-Hydroxyäthoxy)-äthoxy]-äthyl}-2,2-dichloracetamid,
N-[2-(2-Hydroxyäthoxy)-äthyl]-2,2-dichloracetamid,
N-[2-(2-n-Butoxyäthoxy)-äthyl]-N-(2-propinyl)-2,2-dichloracetamid,
N-{2-[2-(2-n-Butoxyäthoxy)-äthoxy]-n-propyl}-2,2-dichloracetamid,
N-Allyl-N-[2-(2-n-butoxyäthoxy)-äthyl]-2,2-dichloracetamid,
N-(2-Propinyl)-N-{2-[2-(2-(2-propinyloxy)-äthoxy)-äthoxy]-äthyl}-2,2-dichloracetamid,
N-{2-[2-(2-Methoxyäthoxy)-äthoxy]-äthyl}-N-(2-propinyl)-2,2-dichloracetamid,
N-Benzyl-N-[2-(2-n-butoxyäthoxy)-äthyl]-2,2-dichloracetamid,
N-Allyl-N-{2-[2-(2-methoxyäthoxy)-äthoxy]-äthyl}-2,2-dichloracetamid,
N-[2-(2-n-Butoxyäthoxy)-äthyl]-N-(n-propyl)-2,2-dichloracetamid,
N-(2-Methoxyäthyl)-N-{2-[2-(2-methoxyäthoxy)-äthoxy]-äthyl}-2,2-dichloracetamid,
N-Benzyl-N-{2-[2-(2-benzyloxyäthoxy)-äthoxy]-äthyl}-2,2-dichloracetamid,
N-Allyl-N-{2-[2-(2-allyloxyäthoxy)-äthoxy]-äthyl}-2,2-dichloracetamid,
N-Benzyl-N-{2-[2-(2-methoxyäthoxy)-äthoxy]-äthyl}-2,2-dichloracetamid,
N-Allyl-N-[2-(2-allyloxyäthoxy)-äthyl]-2,2-dichloracetamid,
N-{2-[2-(2-Methoxyäthoxy)-äthoxy]-äthyl}-N-methyl-2,2-dichloracetamid,
N-[2-(2-Methoxyäthoxy)-äthyl]-N-methyl-2,2-dichloracetamid,
N-Allyl-N-{2-[2-((2-methoxyäthoxy)-methoxy)-äthoxy]-äthyl}-2,2-dichloracetamid,
N-Allyl-N-{2-[(2-methoxyäthoxy)-methoxy]-äthyl}-2,2-dichloracetamid,
N-{2-[(2-Methoxyäthoxy)-methoxy]-äthyl}-N-[(2-methoxyäthoxy)-methyl]-2,2-dichloracetamid und
N-Allyl-N-{2-[2-[2-((2-methoxyäthoxy)-methoxy)-äthoxy]-äthoxy]-äthyl}-2,2-dichloracetamid.

12. Verfahren zur Herstellung von Verbindungen der Formel I nach Anspruch 1, dadurch gekennzeichnet, dass man

a) eine Verbindung der Formel II

$$\begin{array}{l} R^1 \\ | \\ HN\text{-}(A^1\text{-}O)_m\text{-}(A^2\text{-}O)_n\text{-}(A^3\text{-}O)_o\text{-}(A^4\text{-}O)_p\text{-}R^2 \end{array} \qquad (II)$$

worin $R^1$, $R^2$, $A^1$, $A^2$, $A^3$, $A^4$, m, n, o und p die für Formel I angegebenen Bedeutungen haben, in Gegenwart eines säurebindenden Mittels mit 2,2-Dichloracetylchlorid umsetzt, oder

b) eine Verbindung der Formel Ia

$$Cl_2CH\text{-}CONH\text{-}(A^1\text{-}O)_m\text{-}(A^2\text{-}O)_n\text{-}(A^3\text{-}O)_o\text{-}(A_4\text{-}O)_p\text{-}R^2 \qquad (Ia)$$

worin $A^1$, $A^2$, $A^3$, $A^4$, m, n, o und p die für Formel I angegebenen Bedeutungen haben und $R^2$ die für Formel I angegebenen Bedeutungen mit Ausnahme von Wasserstoff hat, in Gegenwart eines säurebindenden Mittels mit einer Verbindung der Formel IV

$$X^1\text{-}R^1 \qquad (IV)$$

worin $R^1$ die für Formel 1 angegebene Bedeutung hat und $X^1$ für einen abspaltbaren Rest steht, umsetzt und gewünschtenfalls eine erhaltene Verbindung, in welcher $R^2$ für ein unsubstituiertes oder durch Chlor ein- oder mehrfach substituiertes Alkylcarbonyl mit 1 bis 6 Kohlenstoffatomen im Alkylteil steht, hydrolisiert, oder

c) eine Verbindung der Formel Ib

$$\begin{array}{l} \qquad\qquad R^1 \\ \qquad\qquad | \\ Cl_2CH\text{-}CON\text{-}(A^1\text{-}O)_m\text{-}(A^2\text{-}O)_n\text{-}(A^3\text{-}O)_o\text{-}(A^4\text{-}O)_pH \end{array} \qquad (Ib)$$

worin $A^1$, $A^2$, $A^3$, $A^4$, m, n, o und p die für Formel 1 angegebenen Bedeutungen haben und $R^1$ die für Formel I angegebenen Bedeutungen mit Ausnahme von Wasserstoff hat, in Gegenwart eines säurebindenden Mittels mit einer Verbindung der Formel V

$$X^2\text{-}R^2 \qquad (V)$$

worin $R^2$ die für Formel 1 angegebene Bedeutung hat und $X^2$ für einen leicht abspaltbaren Rest steht, umsetzt, oder

d) eine Verbindung der Formel Ic

$$Cl_2CH\text{-}CONH\text{-}(A^1\text{-}O)_m\text{-}(A^2\text{-}O)_n\text{-}(A^3\text{-}O)_o\text{-}(A^4\text{-}O)_pH \qquad (Ic)$$

worin $A^1$, $A^2$, $A^3$, $A^4$, m, n, o und p die für Formel I angegebenen Bedeutungen haben, in Gegenwart eines säurebindenden Mittels mit einer Verbindung der Formel VI

$$X^3\text{-}R^3 \qquad (VI)$$

worin $R^3$ die Bedeutung von $R^1$ und $R^2$ wie für Formel I angegeben, hat, wobei $R^1$ und $R^2$ hier identisch sind, und $X^3$ für einen abspaltbaren Rest steht, umsetzt, oder

e) eine Verbindung der Formel VII

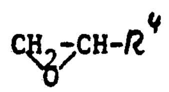

(VII)

worin $R^4$ für Wasserstoff, Methyl oder Äthyl steht, mit einer Verbindung der Formel Ib

$$\begin{array}{l} \qquad\qquad R^1 \\ \qquad\qquad | \\ Cl_2CH\text{-}CON\text{-}(A^1\text{-}O)_m\text{-}(A^2\text{-}O)_n\text{-}(A^3\text{-}O)_o\text{-}(A^4\text{-}O)_pH \end{array} \qquad (Ib)$$

worin

$R^1$, $A^1$, $A^2$, $A^3$ und $A^4$ die für Formel I angegebenen Bedeutungen haben und

i) m eine Zahl von 1 bis 4 ist und n, o und p die Zahl 0 bedeuten, oder

ii) m eine Zahl von 1 bis 5 und n eine Zahl von 0 bis 2 ist und o und p 0 sind und die Summe von m und n eine Zahl von 2 bis 4 ergibt, oder

iii) m eine Zahl von 1 bis 5, n eine Zahl von 0 bis 3, o eine Zahl von 0 bis 2 und p die Zahl 0 ist und die Summe von m, n und o eine Zahl von 2 bis 4 ergibt, oder

iv) m eine Zahl von 1 bis 5 ist, n und o eine Zahl von 0 bis 3 sind und p eine Zahl von 0 bis 2 ist und die Summe von m, n, o und p eine Zahl von 2 bis 4 ergibt, umsetzt.

13. Mittel zum Schützen von Kulturpflanzen gegen schädigende Wirkungen von Herbiziden, dadurch gekennzeichnet, dass es als aktive Komponente eine Verbindung der Formel 1 gemäss Anspruch 1 enthält.

14. Mittel nach Anspruch 13, dadurch gekennzeichnet, dass es eine Verbindung der Formel I gemäss Anspruch 1 zusammen mit einem Herbizid enthält.

15. Mittel nach Anspruch 14, dadurch gekennzeichnet, dass es als Herbizid ein Halogenacetanilid enthält.

16. Mittel nach Anspruch 15, dadurch gekennzeichnet, dass es als Herbizid ein Chloracetanilid enthält.

17. Mittel nach Anspruch 16, dadurch gekennzeichnet, dass es als Herbizid 2-Chlor-N-(2-äthyl-6-methylphenyl)-N-(2-methoxy-1-methyläthyl)-acetamid enthält.

18. Mittel nach Anspruch 14, dadurch gekennzeichnet, dass es als Herbizid ein Thiolcarbamat enthält.

19. Verfahren zum Schützen von Kulturpflanzen gegen schädigende Wirkungen von Herbiziden, dadurch gekennzeichnet, dass man die Kulturpflanzen, Teile dieser Pflanzen oder Anbauflächen für Kulturpflanzen mit einer Verbindung der Formel I gemäss Anspruch 1 behandelt.

20. Verfahren zur selektiven Bekämpfung von Unkräutern in Kulturpflanzenbeständen, dadurch gekennzeichnet, dass man die Kulturpflanzen, Teile dieser Kulturpflanzen oder Anbauflächen für Kulturpflanzen mit einem Herbizid und einer wirksamen Dosis einer Verbindung der Formel I gemäss Anspruch 1 als Gegenmittel behandelt.

21. Verwendung einer Verbindung der Formel I zum Schützen von Kulturpflanzen gegen schädigende Wirkungen von Herbiziden.

## Claims

1. Compounds of formula I

$$\begin{array}{l} \qquad\qquad\quad R^1 \\ \qquad\qquad\quad | \\ Cl_2CH\text{-}CON\text{-}(A^1\text{-}O)_m(A^2\text{-}O)_n\text{-}(A^3O)_o\text{-}(A^4\text{-}O)_p\text{-}R^2 \end{array} \qquad (I)$$

wherein

$R^1$ is hydrogen, benzyl, $C_1$-$C_6$alkyl that is unsubstituted or mono- or poly-substituted by substituents from the group consisting of chlorine, cyano, $C_1$-$C_6$alkoxy, $C_1$-$C_4$alkoxy-$C_1$-$C_4$alkoxy, carboxy and carbalkoxy having 1 to 6 carbon atoms in the alkyl moiety, or is $C_3$-$C_6$alkenyl that is unsubstituted or mono- or poly-substituted by substituents from the group consisting of chlorine, cyano, $C_1$-$C_6$alkoxy, carboxy and carbalkoxy having 1 to 6 carbon atoms in the alkyl moiety, or is $C_3$-$C_6$alkynyl that is unsubstituted or mono- or poly-substituted by substituents from the group consisting of chlorine, cyano, $C_1$-$C_6$alkoxy, carboxy and carbalkoxy having 1 to 6 carbon atoms in the alkyl moiety,

$R^2$ is hydrogen, benzyl, alkylcarbonyl that has 1 to 6 carbon atoms in the alkyl moiety and that is unsubstituted or mono- or poly-substituted by chlorine, or is $C_1$-$C_6$alkyl that is unsubstituted or mono- or poly-substituted by substituents from the group consisting of chlorine, cyano, $C_1$-$C_6$alkoxy, carboxy and carbalkoxy having 1 to 6 carbon atoms in the alkyl moiety, or is $C_2$-$C_6$alkenyl that is unsubstituted or mono- or poly-substituted by substituents from the group consisting of chlorine, cyano, $C_1$-$C_6$alkoxy, carboxy and carbalkoxy having 1 to 6 carbon atoms in the alkyl moiety, or is $C_2$-$C_6$alkynyl that is unsubstituted or mono- or poly-substituted by substituents from the group consisting of chlorine, cyano, $C_1$-$C_6$alkoxy, carboxy and carbalkoxy having 1 to 6 carbon atoms in the alkyl moiety,

$A^1$ is a $C_2$-$C_4$alkylene radical,

$A^2$, $A^3$ and $A^4$ independently of one another are each a $C_1$-$C_4$alkylene radical,

m is a number from 1 to 5,

n, o and p independently of one another are each a number from 0 to 3, and

the sum of m, n, o and p is a number from 2 to 5.

2. Compounds according to claim 1, wherein

$A^1$ is an ethylene radical,

m is the number 2 or 3, and

n, o and p are the number 0, and

$R^1$ and $R^2$ have the meanings given in claim 1.

3. Compounds according to claim 1, wherein

$R^1$ is benzyl, $C_1$-$C_6$alkyl that is unsubstituted or mono- or poly-substituted by substituents from the group consisting of chlorine, cyano, $C_1$-$C_6$alkoxy, $C_1$-$C_4$alkoxy-$C_1$-$C_4$alkoxy, carboxy and carbalkoxy having 1 to 6 carbon atoms in the alkyl moiety, or is $C_3$-$C_6$alkenyl that is unsubstituted or mono- or poly-substituted by substituents from the group consisting of chlorine, cyano, $C_1$-$C_6$alkoxy, carboxy and carbalkoxy having 1 to 6 carbon atoms in the alkyl moiety, or is $C_3$-$C_6$alkynyl that is unsubstituted or mono- or poly-substituted by substituents from the group consisting of chlorine, cyano, $C_1$-$C_6$alkoxy, carboxy and carbalkoxy having 1 to 6 carbon atoms in the alkyl moiety,

$A^1$ is an ethylene radical,

m is the number 2 or 3, and

n, o and p are the number 0, and

$R^2$ has the meaning given in claim 1.

4. Compounds according to claim 1, wherein

$R^1$ is benzyl, $C_1$-$C_6$alkyl that is unsubstituted or mono- or poly-substituted by substituents from the group consisting of chlorine, cyano, $C_1$-$C_6$alkoxy, $C_1$-$C_4$alkoxy-$C_1$-$C_4$alkoxy, carboxy and carbalkoxy having 1 to 6 carbon atoms in the alkyl moiety, or is $C_3$-$C_6$alkenyl that is unsubstituted or mono- or poly-substituted by substituents from the group consisting of chlorine, cyano, $C_1$-$C_6$alkoxy, carboxy and carbalkoxy having 1 to 6 carbon atoms in the alkyl moiety, or is $C_3$-$C_6$alkynyl that is unsubstituted or mono- or poly-substituted by substituents from the group consisting of chlorine, $C_1$-$C_6$alkoxy, carboxy and carbalkoxy having 1 to 6 carbon atoms in the alkyl moiety;

$R^2$ is benzyl, alkylcarbonyl that has 1 to 6 carbon atoms in the alkyl moiety and that is unsubstituted or mono- or poly-substituted by chlorine, or is $C_1$-$C_6$alkyl that is unsubstituted or mono- or poly-substituted by substituents from the group consisting of chlorine, cyano, $C_1$-$C_6$alkoxy, carboxy and carbalkoxy having 1 to 6 carbon atoms in the alkyl moiety, or is $C_2$-$C_6$alkenyl that is unsubstituted or mono- or poly-substituted by substituents from the group consisting of chlorine, cyano, $C_1$-$C_6$alkoxy, carboxy and carbalkoxy having 1 to 6

carbon atoms in the alkyl moiety, or is $C_2$-$C_6$alkynyl that is unsubstituted or mono- or poly-substituted by substituents from the group consisting of chlorine, cyano, $C_1$-$C_6$-alkoxy, carboxy and carbalkoxy having 1 to 6 carbon atoms in the alkyl moiety, and

$A^1$, $A^2$, $A^3$, $A^4$, m, n, o and p have the meanings given in claim 1.

5. Compounds according to claim 1, wherein

$A^1$ is an ethylene radical,

m is the number 2 or 3, and

n, o and p are the number 0, and

$R^2$ is benzyl, alkylcarbonyl that has 1 to 6 carbon atoms in the alkyl moiety and that is unsubstituted or mono- or poly-substituted by chlorine, or is $C_1$-$C_6$alkyl that is unsubstituted or mono- or poly-substituted by substituents from the group consisting of chlorine, cyano, $C_1$-$C_6$alkoxy, $C_1$-$C_4$alkoxy-$C_1$-$C_4$alkoxy, carboxy and carbalkoxy having 1 to 6 carbon atoms in the alkyl moiety, or is $C_2$-$C_6$alkenyl that is unsubstituted or mono- or poly-substituted by substituents from the group consisting of chlorine, cyano, $C_1$-$C_6$alkoxy, carboxy and carbalkoxy having 1 to 6 carbon atoms in the alkyl moiety, or is $C_2$-$C_6$alkynyl that is unsubstituted or mono- or poly-substituted by substituents from the group consisting of chlorine, cyano, $C_1$-$C_6$alkoxy, carboxy and carbalkoxy having 1 to 6 carbon atoms in the alkyl moiety, and

$R^1$ has the meaning given in claim 1.

6. Compounds according to claim 1, wherein

$R^1$ is benzyl,$C_1$-$C_6$alkyl that is unsubstituted or mono- or poly-substituted by substituents from the group consisting of chlorine, cyano, $C_1$-$C_6$alkoxy, $C_1$-$C_4$alkoxy-$C_1$-$C_4$alkoxy, carboxy and carbalkoxy having 1 to 6 carbon atoms in the alkyl moiety, or is $C_3$-$C_6$alkenyl that is unsubstituted or mono- or poly-substituted by substituents from the group consisting of chlorine, cyano, $C_1$-$C_6$alkoxy, carboxy and carbalkoxy having 1 to 6 carbon atoms in the alkyl moiety, or is $C_3$-$C_6$alkynyl that is unsubstituted or mono- or poly-substituted by substituents from the group consisting of chlorine, cyano, $C_1$-$C_6$alkoxy, carboxy and carbalkoxy having 1 to 6 carbon atoms in the alkyl moiety,

$R^2$ is benzyl, alkylcarbonyl that has 1 to 6 carbon atoms in the alkyl moiety and that is unsubstituted or mono- or poly-substituted by chlorine, or is $C_1$-$C_6$alkyl that is unsubstituted or mono- or poly-substituted by substituents from the group consisting of chlorine, cyano, $C_1$-$C_6$alkoxy, carboxy and carbalkoxy having 1 to 6 carbon atoms in the alkyl moiety, or is $C_2$-$C_6$alkenyl that is unsubstituted or mono- or poly-substituted by substituents from the group consisting of chlorine, cyano, $C_1$-$C_6$alkoxy, carboxy and carbalkoxy having 1 to 6 carbon atoms in the alkyl moiety, or is $C_2$-$C_6$alkynyl that is unsubstituted or mono- or poly-substituted by substituents from the group consisting of chlorine, cyano, $C_1$-$C_6$-alkoxy, carboxy and carbalkoxy having 1 to 6 carbon atoms in the alkyl moiety, and

$A^1$ is an ethylene radical,

m is the number 2 or 3, and

n, o and p are the number 0.

7. Compounds according to claim 1, wherein

$R^1$ is hydrogen, benzyl, $C_1$-$C_4$alkyl, $C_1$-$C_4$alkoxy-$C_1$-$C_4$alkyl, $C_1$-$C_4$alkoxy-$C_1$-$C_4$alkoxy-$C_1$-$C_4$alkyl, allyl or 2-propynyl,

$R^2$ is hydrogen, benzyl, $C_1$-$C_4$alkyl, allyl or 2-propynyl,

$A^1$ is an ethylene or 2-methylethylene radical,

$A^2$ is a methylene or ethylene radical,

$A^3$ is an ethylene radical,

m is a number from 1 to 3,

n is a number from 0 to 2,

o is the number 0 or 1, and

p is the number 0, and

the sum of m, n and o is a number from 2 to 5.

8. Compounds according to claim 7, wherein

$R^1$ is hydrogen, benzyl, $C_1$-$C_3$alkyl, 2-methoxyethyl, allyl or 2-propynyl,

$A^2$ is an ethylene radical,

n is the number 0 or 2, and

n is the number 0,

$R^2$, $A^1$, m and p have the meanings given in claim 9, and

the sum of m and n is the number 2 or 3.

9. Compounds according to claim 8, wherein

$R^1$ is hydrogen, benzyl, n-propyl, allyl or 2-propynyl,

$R^2$ is methyl, n-butyl or 2-propynyl,

$A^1$ is an ethylene radical,

m is the number 2 or 3, and

n, o and p are the number 0.

10. Compounds according to claim 8, wherein

$R^1$ is hydrogen, benzyl, n-propyl, allyl or 2-propynyl,

$R^2$ is methyl,n-butyl or 2-propynyl,

$A^1$ is a 2-methylethylene radical,

$A^2$ is an ethylene radical,
m is the number 1,
n is the number2, and
o and p are the number 0.

11. A compound of formula I according to claim 1, selected from the group consisting of:
N-{2-[2-(2-methoxyethoxy)-ethoxy]-ethyl}-2,2-dichloroacetamide,
N-[2-(2-n-butoxyethoxy)-ethyl]-2,2-dichloroacetamide,
N-{2-[2-(2-hydroxyethoxy)-ethoxy]-ethyl}-2,2-dichloroacetamide,
N-[2-(2-hydroxyethoxy)-ethyl]-2,2-dichloroacetamide,
N-[2-(2-n-butoxyethoxy)-ethyl]-N-(2-propynyl)-2,2-dichloroacetamide,
N-{2-[2-(2-n-butoxyethoxy)-ethoxy]-n-propyl}-2,2-dichloroacetamide,
N-allyl-N-[2-(2-n-butoxyethoxy)-ethyl]-2,2-dichloroacetamide,
N-(2-propynyl)-N-{2-[2-(2-(2-propynyloxy)-ethoxy)-ethoxy]-ethyl}-2,2-dichloroacetamide,
N-{2-[2-(2-methoxyethoxy)-ethoxy]-ethyl)-N-(2-propynyl)-2,2-dichloroacetamide,
N-benzyl-N-[2-(2-n-butoxyethoxy)-ethyl]-2,2-dichloroacetamide,
N-allyl-N-{2-[2-(2-methoxyethoxy)-ethoxy]-ethyl}-2,2-dichloroacetamide,
N-[2-(2-n-butoxyethoxy)-ethyl]-N-(n-propyl)-2,2-dichloroacetamide,
N-(2-methoxyethyl)-N-{2-[2-(2-methoxyethoxy)-ethoxy]-ethyl}-2,2-dichloroacetamide,
N-benzyl-N-{2-[2-(2-benzyloxyethoxy)-ethoxy]-ethyl}-2,2-dichloroacetamide,
N-allyl-N-{2-[2-(2-allyloxyethoxy)-ethoxy]-ethyl}-2,2-dichloroacetamide,
N-benzyl-N-{2-[2-(2-methoxyethoxy)-ethoxy]-ethyl}-2,2-dichloroacetamide,
N-allyl-N-[2-(2-allyloxyethoxy)-ethyl]-2,2-dichloroacetamide,
N-{2-[2-(2-methoxyethoxy)-ethoxy]-ethyl}-N-methyl-2,2-dichloroacetamide,
N-[2-(2-methoxyethoxy)-ethyl]-N-methyl-2,2-dichloroacetamide,
N-allyl-N-{2-[2-((2-methoxyethoxy)-methoxy)-ethoxy]-ethyl)-2,2-dichloroacetamide,
N-allyl-N-(2-[(2-methoxyethoxy)-methoxy]-ethyl)-2,2-dichloroacetamide,
N-{2-[(2-methoxyethoxy)-methoxy]-ethyl}-N-[(2-methoxyethoxy)-methyl]-2,2-dichloroacetamide and
N-allyl-N-{2-[2-[2-((2-methoxyethoxy)-methoxy)-ethoxy]-ethoxy]-ethyl}-2,2-dichloroacetamide.

12. A process for the preparation of compounds of formula I according to claim 1, which process comprises:
a) reacting a compound of formula II

$$HN(R^1)-(A^1-O)_m-(aA^2-O)_n-(A^3-O)_o-(A^4-O)_p-R^2 \quad (II)$$

wherein $R^1$, $R^2$, $A^1$, $A^2$, $A^3$, $A^4$, m, n, o and p have the meanings given for formula I, in the presence of an acid-binding agent, with 2,2-dichloroacetyl chloride; or

b) reacting a compound of formula Ia

$$Cl_2CH-CONH-(A^1-O)_m-(A^2-O)_n-(A^3-O)_o-(A_4-O)_p-R^2 \quad (Ia)$$

wherein $A^1$, $A^2$, $A^3$, $A^4$, m, n, o and p have the meanings given for formula I, and $R^2$ has the meanings given for formula I with the exception of hydrogen, in the presence of an acid-binding agent, with a compound of formula IV

$$X^1-R^1 \quad (IV)$$

wherein $R^1$ has the meaning given for formula I, and $X^1$ is a removable radical, and, if desired, hydrolysing a resulting compound in which $R^2$ is alkylcarbonyl that has 1 to 6 carbon atoms in the alkyl moiety and that is unsubstituted or mono- or poly-substituted by chlorine; or

c) reacting a compound of formula Ib

$$Cl_2CH-CON(R^1)-(A^1-O)_m-(A^2-O)_n-(A^3-O)_o-(A^4-O)_pH \quad (Ib)$$

wherein $A^1$, $A^2$, $A^3$, $A^4$, m, n, o and p have the meanings given for formula I, and $R^1$ has the meanings given for formula I with the exception of hydrogen, in the presence of an acid-binding agent, with a compound of formula V

$$X^2-R^2 \quad (V)$$

wherein $R^2$ has the meaning given for formula I, and $X^2$ is a readily removable radical; or

d) reacting a compound of formula Ic

$Cl_2CH\text{-}CONH\text{-}(A^1\text{-}O)_m\text{-}(A^2\text{-}O)_n\text{-}(A^3\text{-}O)_o\text{-}(A^4\text{-}O)_pH$ (Ic)

wherein $A^1$, $A^2$, $A^3$, $A^4$, m, n, o and p have the meanings given for formula I, in the presence of an acid-binding agent, with a compound of formula VI

$X^3\text{-}X^3$ (VI)

wherein $R^3$ has the meanings of $R^1$ and $R^2$ as given for formula I, $R^1$ and $R^2$ being identical here, and $X^3$ is a removable radical; or

e) reacting a compound of formula VII

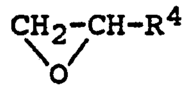

(VII)

wherein $R^4$ is hydrogen, methyl or ethyl, with a compound of formula Ib

$$Cl_2CH\text{-}CO\underset{}{\overset{R^1}{\overset{|}{N}}}\text{-}(A^1\text{-}O)_m\text{-}(A^2\text{-}O)_n\text{-}(A^3\text{-}O)_o\text{-}(A^4\text{-}O)_pH \quad \text{(Ib)}$$

wherein $R^1$, $A^1$, $A^2$, $A^3$ and $A^4$ have the meanings given for formula I, and

i) m is a number from 1 to 4, and n, o and p are the number 0, or

ii) m is a number from 1 to 5, and n is a number from 0 to 2, and o and p are 0, and the sum of m and n is a number from 2 to 4, or

iii) m is a number from 1 to 5, n is a number from 0 to 3, o is a number from 0 to 2, and p is the number 0, and the sum of m, n and o is a number from 2 to 4, or

iv) m is a number from 1 to 5, n and o are a number from 0 to 3, and p is a number from 0 to 2, and the sum of m, n, o and p is a number from 2 to 4.

13. A composition for protecting cultivated plants against the harmful effects of herbicides, which composition contains, as active ingredient, a compound of formula I according to claim 1.

14. A composition according to claim 13, which contains a compound of formula I according to claim 1, together with a herbicide.

15. A composition according to claim 14, which contains, as herbicide, a haloacetanilide.

16. A composition according to claim 15, which contains, as herbicide, a chloroacetanilide.

17. A composition according to claim 16, which contains, as herbicide, 2-chloro-N-(2-ethyl-6-methylphenyl)-N-(2-methoxy-1-methylethyl)-acetamide.

18. A composition according to claim 14, which contains, as herbicide, a thiolcarbamate.

19. A method of protecting cultivated plants against the harmful effects of herbicides, which method comprises treating the cultivated plants, parts of these plants or cultivation areas for cultivated plants with a compound of formula I according to claim 1.

20. A method of selectively controlling weeds in crops of cultivated plants, which method comprises treating the cultivated plants, parts of these cultivated plants or cultivation areas for cultivated plants with a herbicide and an effective dose of a compound of formula I according to claim 1 as antidote.

21. The use of a compound of formula I for protecting cultivated plants against the harmful effects of herbicides.

**Revendications**

1. Composés de formule I

$$Cl_2CH\text{-}CO\overset{R^1}{\overset{|}{N}}\text{-}(A^1\text{-}O)_m\text{-}(A^2\text{-}O)_n\text{-}(A^3\text{-}O)_o\text{-}(A^4\text{-}O)_p\text{-}R^2 \quad \text{(I)}$$

dans laquelle

$R^1$ représente l'hydrogène, un groupe benzyle, un groupe alkyle en $C_1$-$C_6$ non substitué ou portant un ou

plusieurs substituants choisis parmi le chlore, les groupes cyano, alcoxy en $C_1$-$C_6$, (alcoxy en $C_1$-$C_4$)-alcoxy en $C_1$-$C_4$, carboxy ou carbalcoxy contenant 1 à 6 atomes de carbone dans la partie alkyle, un groupe alcényle en $C_3$-$C_6$ non substitué ou portant un ou plusieurs substituants choisis parmi le chlore, les groupes cyano, alcoxy en $C_1$-$C_6$, carboxy ou carbalcoxy contenant 1 à 6 atomes de carbone dans la partie alkyle, ou un groupe alcynyle en $C_3$-$C_6$ non substitué ou portant un ou plusieurs substituants choisis parmi le chlore, les groupes cyano, alcoxy en $C_1$-$C_6$, carboxy ou carbalcoxy contenant 1 à 6 atomes de carbone dans la partie alkyle,

$R_2$ représente l'hydrogène, un groupe benzyle, un groupe alkylcarbonyle contenant 1 à 6 atomes de carbone dans la partie alkyle, non substitué ou mono- ou poly-substitué par le chlore, un groupe alkyle en $C_1$-$C_6$ non substitué ou portant un ou plusieurs substituants choisis parmi le chlore, les groupes cyano, alcoxy en $C_1$-$C_6$, carboxy ou carbalcoxy contenant 1 à 6 atomes de carbone dans la partie alkyle, un groupe alcényle en $C_2$-$C_6$ non substitué ou portant un ou plusieurs substituants choisis parmi le chlore, les groupes cyano, alcoxy en $C_1$-$C_6$, carboxy ou carbalcoxy contenant 1 à 6 atomes de carbone dans la partie alkyle, ou un groupe alcynyle en $C_2$-$C_6$ non substitué ou portant un ou plusieurs substituants choisis parmi le chlore les groupes cyano, alcoxy en $C_1$-$C_6$, carboxy ou carbalcoxy contenant 1 à 6 atomes de carbone dans la partie alkyle,

$A^1$ représente un groupe alkylène en $C_2$-$C_4$,

$A^2$, $A^3$ et $A^4$ représentent chacun, indépendamment les uns des autres, un groupe alkylène en $C_1$-$C_4$,

m est un nombre allant de 1 à 5,

n, o et p représentent chacun, indépendamment les uns des autres, un nombre allant de 0 à 3, et

la somme de m, n, o et p a une valeur de 2 à 5.

2. Composés selon la revendication 1, caractérisés en ce que

$A^1$ représente un groupe éthylène,

m est égal à 2 ou 3 et

n, o et p sont égaux à 0,

$R^1$ et $R^2$ ayant les significations indiquées dans la revendication 1.

3. Composés selon la revendication 1, caractérisés en ce que

$R^1$ représente un groupe benzyle, un groupe alkyle en $C_1$-$C_6$ non substitué ou portant un ou plusieurs substituants choisis parmi le chlore, les groupes cyano, alcoxy en $C_1$-$C_6$, (alcoxy en $C_1$-$C_4$)-alcoxy en $C_1$-$C_4$, carboxy ou carbalcoxy contenant 1 à 6 atomes de carbone dans la partie alkyle, un groupe alcényle en $C_3$-$C_6$ non substitué ou portant un ou plusieurs substituants choisis parmi le chlore, les groupes cyano, alcoxy en $C_1$-$C_6$, carboxy ou carbalcoxy contenant 1 à 6 atomes de carbone dans la partie alkyle, ou un groupe alcynyle en $C_3$-$C_6$ non substitué ou portant un ou plusieurs substituants choisis parmi le chlore, les groupes cyano, alcoxy en $C_1$-$C_6$, carboxy ou carbalcoxy contenant 1 à 6 atomes de carbone dans la partie alkyle,

$A^1$ représente un groupe éthylène,

m est égal à 2 ou 3 et

n, o et p sont égaux à 0,

$R^2$ ayant les significations indiquées dans la revendication 1.

4. Composés selon la revendication 1, caractérisés en ce que

$R^1$ représente un groupe benzyle, un groupe alkyle en $C_1$-$C_6$ non substitué ou portant un ou plusieurs substituants choisis parmi le chlore, les groupes cyano, alcoxy en $C_1$-$C_6$, (alcoxy en $C_1$-$C_4$)-alcoxy en $C_1$-$C_4$, carboxy ou carbalcoxy contenant 1 à 6 atomes de carbone dans la partie alkyle, un groupe alcényle en $C_3$-$C_6$ non substitué ou portant un ou plusieurs substituants choisis parmi le chlore, les groupes cyano, alcoxy en $C_1$-$C_6$, carboxy ou carbalcoxy contenant 1 à 6 atomes de carbone dans la partie alkyle, un groupe alcynyle en $C_3$-$C_6$ non substitué ou portant un ou plusieurs substituants choisis parmi le chlore, les groupes alcoxy en $C_1$-$C_6$, carboxy ou carbalcoxy contenant 1 à 6 atomes de carbone dans la partie alkyle,

$R^2$ représente un groupe benzyle, un groupe alkylcarbonyle contenant 1 à 6 atomes de carbone dans la partie alkyle, non substitué ou mono- ou polysubstitué par le chlore, un groupe alkyle en $C_1$-$C_6$ non substitué ou portant un ou plusieurs substituants choisis parmi le chlore, les groupes cyano, alcoxy en $C_1$-$C_6$, carboxy ou carbalcoxy contenant 1 à 6 atomes de carbone dans la partie alkyle, un groupe alcényle en $C_2$-$C_6$ non substitué ou portant un ou plusieurs substituants choisis parmi le chlore, les groupes cyano, alcoxy en $C_1$-$C_6$, carboxy ou carbalcoxy contenant 1 à 6 atomes de carbone dans la partie alkyle, ou bien un groupe alcynyle en $C_2$-$C_6$ non substitué ou portant un ou plusieurs substituants choisis parmi le chlore, les groupes cyano, alcoxy en $C_1$-$C_6$, carboxy ou carbalcoxy contenant 1 à 6 atomes de carbone dans la partie alkyle, et

$A^1$, $A^2$, $A^3$, $A^4$, m, n, o et p ont les significations indiquées dans la revendication 1.

5. Composés selon la revendication 1, caractérisés en ce que

$A^1$ représente un groupe éthylène,

m est égal à 2 ou 3 et

n, o et p sont égaux à 0 et

$R^2$ représente un groupe benzyle, un groupe alkylcarbonyle contenant 1 à 6 atomes de carbone dans la partie alkyle, non substitué ou mono- ou poly-substitué par le chlore, un groupe alkyle en $C_1$-$C_6$ non substitué ou portant un ou plusieurs substituants choisis parmi le chlore, les groupes cyano, alcoxy en $C_1$-$C_6$, (alcoxy en $C_1$-$C_4$)-alcoxy en $C_1$-$C_4$, carboxy ou carbalcoxy contenant 1 à 6 atomes de carbone dans la partie alkyle, un groupe alcényle en $C_2$-$C_6$ non substitué ou portant un ou plusieurs substituants choisis parmi le chlore, les groupes cyano, alcoxy en $C_1$-$C_6$, carboxy ou carbalcoxy contenant 1 à 6 atomes de carbone dans la partie alkyle, ou un groupe alcynyle en $C_2$-$C_6$ non substitué ou portant un ou plusieurs substituants choisis parmi le chlore, les groupes cyano, alcoxy en $C_1$-$C_6$, carboxy ou carbalcoxy contenant 1 à 6 atomes de carbone dans la partie

alkyle, et

$R^1$ a les significations indiquées dans la revendication 1.

6. Composés selon la revendication 1, caractérisés en ce que

$R^1$ représente un groupe benzyle, un groupe alkyle en $C_1$-$C_6$ non substitué ou portant un ou plusieurs substituants choisis parmi le chlore, les groupes cyano, alcoxy en $C_1$-$C_6$, (alcoxy en $C_1$-$C_4$)-alcoxy en $C_1$-$C_4$, carboxy ou carbalcoxy contenant 1 à 6 atomes de carbone dans la partie alkyle, un groupe alcényle en $C_3$-$C_6$ non substitué ou portant un ou plusieurs substituants choisis parmi le chlore, les groupes cyano, alcoxy en $C_1$-$C_6$, carboxy ou carbalcoxy contenant 1 à 6 atomes de carbone dans la partie alkyle, ou un groupe alcynyle en $C_3$-$C_6$ non substitué ou portant un ou plusieurs substituants choisis parmi le chlore, les groupes cyano, alcoxy en $C_1$-$C_6$, carboxy ou carbalcoxy contenant 1 à 6 atomes de carbone dans la partie alkyle,

$R^2$ représente un groupe benzyle, un groupe alkylcarbonyle contenant 1 à 6 atomes de carbone dans la partie alkyle, non substitué ou mono- ou polysubstitué par le chlore, un groupe alkyle en $C_1$-$C_6$ non substitué ou portant un ou plusieurs substituants choisis parmi le chlore, les groupes cyano, alcoxy en $C_1$-$C_6$, carboxy ou carbalcoxy contenant 1 à 6 atomes de carbone dans la partie alkyle, un groupe alcényle en $C_2$-$C_6$ non substitué ou portant un ou plusieurs substituants choisis parmi le chlore, les groupes cyano, alcoxy en $C_1$-$C_6$, carboxy ou carbalcoxy contenant 1 à 6 atomes de carbone dans la partie alkyle, ou un groupe alcynyle en $C_2$-$C_6$ non substitué ou portant un ou plusieurs substituants choisis parmi le chlore, les groupes cyano, alcoxy en $C_1$-$C_6$, carboxy ou carbalcoxy contenant 1 à 6 atomes de carbone dans la partie alkyle, et

$A^1$ représente un groupe éthylène,

m est égal à 2 ou 3, et

n, o et p sont égaux à 0.

7. Composés selon la revendication 1, caractérisés en ce que

$R^1$ représente l'hydrogène, un groupe benzyle, alkyle en $C_1$-$C_4$, (alcoxy en $C_1$-$C_4$)-alkyle en $C_1$-$C_4$, (alcoxy en $C_1$-$C_4$)-(alcoxy en $C_1$-$C_4$)-alkyle en $C_1$-$C_4$, allyle ou 2-propynyle,

$R^2$ représente l'hydrogène, un groupe benzyle, alkyle en $C_1$-$C_4$, allyle en 2-propynyle,

$A^1$ représente un groupe éthylène ou 2-méthyléthylène,

$A^2$ représente un groupe méthylène ou éthylène,

$A^3$ représente un groupe éthylène,

m est un nombre allant de 1 à 3,

n un nombre allant de 1 à 2,

o est égal à 0 ou 1 et p est égal à 0, et

la somme de m, n, et o a une valeur de 2 à 5.

8. Composés selon la revendication 7, caractérisés en ce que

$R^1$ represente l'hydrogène, un groupe benzyle, alkyle en $C_1$-$C_3$, 2-méthoxyéthyle, allyle ou 2-propynyle,

$A^2$ représente un groupe éthylène,

m est egal a 0 ou 2 et

n est egal a 0,

$R^2$, $A^1$, m et p ont les significations indiquées dans la revendication 7 et

la somme de m et n est égale à 2 ou 3.

9. Composés selon la revendication 8, caractérisés en ce que

$R^1$ représente l'hydrogène, un groupe benzyle, n-propyle, allyle ou 2-propynyle,

$R^2$ représente un groupe méthyle, n-butyle ou 2-propynyle,

$A^1$ représente un groupe éthylène,

m est égal à 2 ou 3 et

n, o et p sont égaux à 0.

10. Composés selon la revendication 8, caractérisés en ce que

$R^1$ représente l'hydrogène, un groupe benzyle, n-propyle, allyle ou 2-propynyle,

$R^2$ représente un groupe méthyle, n-butyle ou 2-propynyle,

$A^1$ représente un groupe 2-méthyléthylène,

$A^2$ un groupe éthylène,

m est égal à 1,

n est égal à 2 et

o et p sont égaux à 0.

11. Un composé de formule I selon la revendication 1, choisi dans le groupe suivant:

N-{2-[2-(2-méthoxyéthoxy)-éthoxy]-éthyl}-2,2-dichloracétamide,

N-[2-(2-n-butoxyéthoxy)-éthyl]-2,2-dichloracétamide,

N-{-2-[2-(2-hydroxyéthoxy)-éthoxy]-éthyl}-2,2-dichloracétamide,

N-[2-(2-hydroxyéthoxy)-éthyl]-2,2-dichloracétamide,

N-[2-(2-n-butoxyéthoxy)-éthyl]-N-(2-propynyl)-2,2-dichloracétamide,

N-{2-[2-(2-n-butoxyéthoxy)-éthoxy]-n-propyl}-2,2-dichloracétamide,

N-allyl-N-[2-(2-n-butoxyéthoxy)-éthyl]-2,2-dichloracétamide,

N-(2-propynyl)-N-{2-[2-(2-(2-propynyloxy)-éthoxy)-éthoxy]-éthyl}-2,2-dichloracétamide,

N-{2-(2-(2-méthoxyéthoxy)-éthoxy)-éthyl}-N-(2-propynyl)-2,2-dichloracétamide,

N-benzyl-N-(2-(2-n-butoxyéthoxy)-éthyl)-2,2-dichloracétamide,

N-allyl-N-{2-[2-(2-méthoxyéthoxy)-éthoxy]-éthyl}-2,2-dichloracétamide,

N-[2-(2-n-butoxyéthoxy)-éthyl)-N-(n-propyl)-2,2-dichloracétamide,
N-(2-méthoxyéthyl)-N-{2-[2-(2-méthoxyéthoxy)-éthoxy]-éthyl}-2,2-dichloracétamide,
N-benzyl-N-{2-[2-(2-benzyloxyéthoxy)-éthoxy]-éthyl}-2,2-dichloracétamide,
N-allyl-N-{2-[2-(2-allyloxyéthoxy)-éthoxy]-éthyl}-2,2-dichloracétamide,
N-benzyl-N-{2-[2-(2-méthoxyéthoxy)-éthoxy]-éthyl}-2,2-dichloracétamide,
N-allyl-N-[2-(2-allyloxyéthoxy)-éthyl]-2,2-dichloracétamide,
N-{2-[2-(2-méthoxyéthoxy)-éthoxy]-éthyl}-N-méthyl-2,2-dichloracétamide,
N-[2-(2-méthoxyéthoxy)-éthyl]-N-méthyl-2,2-dichloracétamide,
N-allyl-N-{2-[-2-((2-méthoxyéthoxy)-méthoxy)-éthoxy)-éthyl}-2,2-dichloracétamide,
N-allyl-N-{2-[(2-méthoxyéthoxy)-méthoxy)-éthyl}-2,2-dichloracétamide,
N-{2-[(2-méthoxyéthoxy)-méthoxy]-éthyl}-N-[(2-méthoxyéthoxy)-méthyl]-2,2-dichloracétamide, et
N-allyl-N-{2-[2-[2-((2-méthoxyéthoxy)-méthoxy)-éthoxy]-éthoxy]-éthyl}-2,2-dichloracétamide.

12. Procédé de préparation des composés de formule I selon la revendication 1, caractérisé en ce que:

a) on fait réagir un composé de formule II

$$HN(R^1)-(A^1-O)_m-(A^2-O)_n-(A^3-O)_o-(A^4-O)_p-R^2 \qquad (II)$$

dans laquelle $R^1$, $R^2$, $A^1$, $A^2$, $A^3$, $A^4$, m, n, o et p ont les significations indiquées en référence à la formule I, en présence d'un capteur d'acide, avec le chlorure de 2,2-dichloracétyle, ou bien

b) on fait réagir un composé de formule Ia

$$Cl_2CH-CONH-(A^1-O)_m-(A^2-O)_n-(A^3-O)_o-(A_4-O)_p-R^2 \qquad (Ia)$$

dans laquelle $A^1$, $A^2$, $A^3$, $A^4$, m, n, o et p ont les significations indiquées en référence à la formule I et $R^2$ a les significations indiquées en référence à la formule I à l'exception de l'hydrogène, en présence d'un capteur d'acide, avec un composé de formule IV

$$X^1-R^1 \qquad (IV)$$

dans laquelle $R^1$ a les significations indiquées en reférence à la formule I et $X^1$ représente un groupe éliminable, et si on le désire, on hydrolyse un composé ainsi obtenu dans lequel $R^2$ représente un groupe alkylcarbonyle contenant 1 à 6 atomes de carbone dans la partie alkyle, non substitué ou mono- ou polysubstitué par le chlore, ou bien

c) on fait réagir un composé de formule Ib

$$Cl_2CH-CON(R^1)-(A^1-O)_m-(A^2-O)_n-(A^3-O)_o-(A^4-O)_pH \qquad (Ib)$$

dans laquelle $A^1$, $A^2$, $A^3$, $A^4$, m, n, o et p ont les significations indiquées en référence à la formule I et $R^1$ a les significations indiquées en référence à la formule I à l'exception de l'hydrogène, en présence d'un capteur d'acide, avec un composé de formule V

$$X^2-R^2 \qquad (V)$$

dans laquelle $R^2$ a les significations indiquées en référence à la formule I et $X^2$ représente un groupe facile à éliminer, ou bien

d) on fait réagir un composé de formule Ic

$$Cl_2CH-CONH-(A^1-O)_m-(A^2-O)_n-(A^3-O)_o-(A^4-O)_pH \qquad (Ic)$$

dans laquelle $A^1$, $A^2$, $A^3$, $A^4$, m, n, o et p ont les significations indiquées en référence à la formule I, en présence d'un capteur d'acide, avec un composé de formule VI

$$X^3-R^3 \qquad (VI)$$

dans laquelle $R^3$ a les significations indiquées pour $R^1$ et $R^2$ en référence à la formule I, $R^1$ et $R^2$ étant ici identiques, et $X^3$ représente un groupe éliminable, ou bien

e) on fait réagir un composé de formule VII

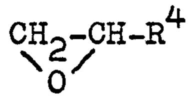

(VII)

dans laquelle $R^4$ représente l'hydrogène, un groupe méthyle ou éthyle, avec un composé de formule Ib

$$Cl_2CH\text{-}CO\overset{\displaystyle R^1\atop |}{N}\text{-}(A^1\text{-}O)_m\text{-}(A^2\text{-}O)_n\text{-}(A^3\text{-}O)_o\text{-}(A^4\text{-}O)_pH \qquad \text{(Ib)}$$

dans laquelle $R^1$, $A^1$, $A^2$, $A^3$ et $A^4$ ont les significations indiquées en référence à la formule I, et

(i) m est un nombre allant de 1 à 4 et n, o et p sont égaux à 0, ou bien

(ii) m est un nombre allant de 1 à 5 et n est un nombre allant de 0 à 2, o et p sont égaux à 0 et la somme de m et n a une valeur de 2 à 4, ou bien

(iii) m est un nombre allant de 1 à 5, n un nombre allant de 0 à 3, o un nombre allant de 0 à 2 et p est égal à 0, la somme de m, n et o ayant une valeur de 2 à 4, ou bien

(iv) m est un nombre allant de 1 à 5, n et o sont des nombres allant de 0 à 3 et p est un nombre allant de 0 à 2 et la somme de m, n, o et p a une valeur de 2 à 4.

13. Produit pour protéger les végétaux cultivés contre les effets nocifs des herbicides, caractérisé en ce qu'il contient en tant que composant actif un composé de formule I selon la revendication 1.

14. Produit selon la revendication 13, caractérisé en ce qu'il contient un composé de formule I selon la revendication 1 avec un herbicide.

15. Produit selon la revendication 14, caractérisé en ce qu'il contient en tant qu'herbicide un halogénoacétanilide.

16. Produit selon la revendication 15, caractérisé en ce qu'il contient en tant qu'herbicide un chloracétanilide.

17. Produit selon la revendication 16, caractérisé en ce qu'il contient en tant qu'herbicide le 2-chloro-N-(2-éthyl-6-méthylphényl)-N-(2-méthoxy-1-méthyléthyl)-acétamide.

18. Produit selon la revendication 14, caractérisé en ce qu'il contient en tant qu'herbicide un thiolcarbamate.

19. Procédé pour protéger les végétaux cultivés contre les effets nocifs des herbicides, caractérisé en ce que l'on traite les végétaux cultivés, des parties des végétaux ou les aires de culture par un composé de formule I selon la revendication 1.

20. Procédé pour combattre sélectivement les végétaux adventices dans des cultures, caractérisé en ce que l'on traite les plantes cultivées, des parties de ces plantes cultivées ou les aires de culture par un herbicide et une dose efficace d'un composé de formule I selon la revendication 1 qui sert d'antidote.

21. Utilisation d'un composé de formule I pour la protection des végétaux cultivés contre les effets nocifs des herbicides.